# EUROPEAN PATENT APPLICATION

(11) **EP 2 840 277 A1**
(43) Date of publication of application: **25.02.2015**
(21) Application number: 13777658.9
(22) Date of filing: 19.04.2013
(51) Int. Cl.: F16D 55/14, F16D 65/14, F16D 65/22, F16D 65/54

(54) **FRICTION BRAKE DEVICE**

(30) Priority: 20.04.2012 JP 2012097111
(71) Applicant: Toyota Jidosha Kabushiki Kaisha, Toyota-shi, Aichi 471-8571 (JP)
(72) Inventor: ISONO, Hiroshi, Aichi 4718571 (JP)
(74) Representative: Winter, Brandl, Fürniss, Hübner, Röss, Kaiser, Polte - Partnerschaft mbB
(86) International application number: PCT/JP2013/061682
(87) International publication number: WO 2013/157645

(57) **Abstract**

A friction brake device 10 having: friction members 14, 16 which are pressed against a pair of friction surfaces 20S, 22S that are rotatable around a rotation axis 18 and opposes to each other; a force increasing mechanism 46 which transmits rotational torque between the friction members, transforms the rotational torque to the force separating the friction members along the rotation axis through a wedge action, and thereby increasing the pressing force; a pressing force control mechanism 34 which control force with which at least one of the friction members is pressed against the associated friction surface; and a normal position-recovering mechanism 142 which returns the friction members 14, 16 to their normal positions when the force controlled by the pressing force control mechanism 34 is 0.

## Description

### TECHNICAL FIELD

The present invention relates to a friction brake device and, more particularly, to a friction brake device which generates friction force by pressing a friction member against a brake rotor.

### BACKGROUND ART

In the field of friction brake devices, a configuration has already known where pressing force for pressing a friction member against a brake rotor is increased by means of pressing a friction member against a brake rotor and generating a wedge action through the use of rotational torque which the friction member receives from the brake rotor. For example, in the under-mentioned patent citation 1, a friction brake device is described which has a self-force-increasing mechanism that generates a wedge action.

According to such a brake device, in comparison with a brake device in which braking force is not increased by a wedge action, braking force can be increased without increasing the pressing force with which the friction members are pressed against the brake rotor by pressing devices.

### CITAION LIST

Patent Literature 1: Japanese Patent Application Laid-open Publication No. 2004-225902

### SUMMARY OF INVENTION

### TECHNICAL PROBLEM

However, in such a conventional friction brake device which generates a wedge action as described in the above-mentioned patent citation 1, since a member for supporting the reaction force of pressing force is provided separately from the pressing device, the brake device cannot help being complicated in structure. Besides, as the increase of the pressing force by the pressing device and the wedge action is achieved on only one side of the brake rotor, braking force cannot adequately be increased.

In order to solve the above-mentioned problems in the friction brake devices such as that described in the patent citation 1, a configuration may be considered in which a pair of friction members are pressed against friction surfaces of a brake rotor opposing to each other and a wedge action is generated by the relative rotations of the pair of friction members. According to this configuration, a braking force can be increased through effective use of the wedge action while avoiding complication of a brake device in structure.

In that configuration, however, if the pair of friction members relatively rotate during non-braking operation of the brake device, a wedge action is generated and the pair of friction members is unnecessarily pressed against the friction surfaces. As a result, unnecessary braking force is generated during non-braking period where the braking device is not operating and, for that reason, the occupants in a vehicle feel so called dragging and the friction members are liable to be abraded earlier.

The present invention was made in view of the above-described drawbacks in a conventional friction brake device generating a wedge action and problems arising when the drawbacks are dissolved. A primary object of the present invention is to adequately increase braking force through the effective use of a wedge action while reducing the risk that unnecessary braking force is generated during non-braking operation.

### SOLUTION TO PROBLEM AND ADVANTAGEOUS EFFECTS

The present invention provides a friction brake device comprising: first and second mutually opposed friction surfaces which are rotatable around a rotation axis and extend perpendicularly to the rotation axis; first and second friction members which are disposed between the first and second friction surfaces and are supported so that the friction members can displace along the rotation axis and can relatively rotate around the rotation axis; a pressing force control mechanism which control force with which at least one of the first and second friction members are pressed against the associated friction surface; and a force increasing mechanism which transforms the rotational torque that at least one of the first and second friction members receives from the asociated friction surface to the force acting in the direction of separating the first and second friction members through the use of a wedge action generated by means of the first and second friction members being relatively rotated around the rotation axis by the rotational torque, and transmits reaction force generated by means of the friction surfaces being pressed by the first and second friction members, respectively, between the first and second friction members; the force increasing mechanism does not conduct the force increasing by the force transforming when the force which is controlled by the pressing force control mechanism is 0; with the positions at which the first and second friction members take when their relative rotation is 0 being normal positions, the force increasing mechanism includes a normal position-recovering mechanism which returns the first and second friction members to their normal positions when the force which is controlled by the pressing force control mechanism is 0.

According to the configuration, when pressing force is controlled by the pressing force control mechanism and one of the first and second friction members is pressed against the associated friction surface in a situation where the first and second friction surfaces rotate around the rotation axis, they frictionally engage with each other. As a result, the one of the friction members receives rotational torque around the rotation axis from the associated friction surface and rotates around the rotation axis relative to the other friction member, resulting in that the force acting in the direction of separating the first and second friction members from each other is generated by the force increasing mechanism. The latter force is proportional to the pressing force which is controlled by the pressing force control mechanism.

Thus, according to the above-mentioned configuration, by controlling the pressing force by means of the pressing force control mechanism, the force acting in the direction of separating the first and second friction members from each other can be controlled, which enables to control the pressing force that press the first and second friction members against the first and second friction surfaces, respectively, to thereby control the braking force. Notably, as the force acting in the direction of separating the first and second friction members from each other is generated by the transformation of the rotational torque through the use of the wedge action, the braking force can be increased as compared to where the wedge action is not utilized.

Beides, the first and second friction members are disposed between the first and second mutually opposed friction surfaces, and the first and second friction members are pressed against the first and second friction surfaces, respectively, by the force increased by the transformation by means of the force increasing mechanism. The reaction force of each pressing force is transmitted to the other pressing member by the force increasing mechanism.

Consequently, according to the above-mentioned configuration, as compared to where the generation of pressing force and the bearing of the reaction force of the pressing force are achieved by a separate member, the structure of the brake device can be simplified. Besides, as compared to where a friction member is only pressed against a friction surface, the braking force can be increased. Therefore, it is possible to adequately increase the braking force through the use of the wedge action while preventing the structure of the brake device from being complicated.

In addition, when the force which is controlled by the pressing force control mechanism is 0, the normal position-recovering mechanism returns the first and second friction members to their normal positions, i.e., the positions where relative rotational displacement between the first and second friction members around the rotation axis is 0. Consequently, as no wedge action is generated, the force transformation and the reaction force transmission can be prevented from being conducted by the force increasing mechanism, and the pair of friction members can be prevented from being unnecessarily pressed against the friction surfaces. Therefore, a risk can be reduced that unnecessary braking force is generated during non-braking operation where the braking device is not operating and, for that reason, the occupants in a vehicle feel so called dragging and the friction members are liable to be abraded earlier.

The above-mentioned configuration may be such that: the friction brake device comprises a clearance adjustment mechanism which reduces a clearance between at least one of the first and second friction members and the associated friction surface by relatively displacing the first and second friction members along the rotation axis so as to leave from each other when the clearance increases in a situation where the first and second friction members are in the normal positions.

According to the configuration, even though the clearance between at least one of the first and second friction members and the associated friction surface increases, the two friction members are relatively displaced in the direction of separating them from each other by the clearance adjusting mechanism so that the clearance is reduced. Consequently, the first and second friction members can be prevented for a long time from rattling between the first and second friction surfaces during non-braking operation.

The first and second friction members can rapidly be made in contact with the first and second friction surfaces at the time of starting the braking operation. Accordingly, it is possible to start generating braking force smoothly at the time of starting braking operation and to reduce the risk that the responsiveness of the brake device in generating braking force is varied due to the above-mentioned clearance at the time of starting braking operation.

The above-mentioned configuration may be such that: the normal position-recovering mechanism includes first and second resilient members which are resiliently deformed by the first and second friction members, respectively, by means of the first and second friction members relatively rotating from the normal positions.

According to the configuration, even if the first and second friction members relatively rotate from the normal positions during non-braking operation, the first and second friction members are biased toward the normal positions by the resilient force of the first and second resilient members, respectively so as to return to the normal positions. Accordingly, a risk can effectively be reduced that the first and second friction members relatively rotate from the normal positions during non-braking operation and a wedge action is generated.

The above-mentioned configuration may be such that: the clearance adjustment mechanism includes a slider which is supported by one of the first and second friction members so as to displace relative to the one friction member along the rotation axis and having an opposed surface of the one friction member, and an actuator which displaces the slider toward the other friction member when the clearance increases.

According to the configuration, one of the first and second friction members supports the slider having an opposed surface of the one friction member so as to displace relative to the one friction member along the rotation axis. When the clearance increases, the slider is displaced toward the other friction member by the actuator. Accordingly, the clearances between the first and second friction members and the associated friction surfaces and the clearance between the first and second opposed surfaces of the first and second friction members can effectively be prevented from assuming excessive values during non-braking operation.

The above-mentioned configuration may be such that: the force increasing mechanism has first and second opposed surfaces which are provided on the first and second friction members, respectively, as opposed to each other and include areas inclined in the same directions relative to a vertical plane perpendicular to the rotation axis, and transforms relative rotational torque of the first and second friction members into the force acting in the direction of separating the first and second friction members from each other by the cooperation of the first and second opposed surfaces.

According to the configuration, when the first and second friction members relatively rotate, the relative rotational torque betqween the first and second friction members is transformed into the force acting in the direction of separating the friction members from each other by the cooperation of the first and second opposed surfaces. Consequently, the force with which the first and second friction members are pressed against the first and second opposed surfaces can effectively be increased through the effective use of the rotational torque. The reaction force which presses the first and second friction members against the first and second opposed surfaces, respectively, is effectively transmitted between the first and second friction members by way of the first and second opposed surfaces.

The above-mentioned configuration may be such that: the distance in the direction along the rotation axis between the surfaces of the first and second friction members on the side of the first and second friction surfaces assumes a minimum value when the first and second friction members are in the normal positions.

According to the configuration, when the first and second friction members are in the normal positions, the distance in the direction along the rotation axis between the surfaces of the first and second friction members on the side of the first and second friction surfaces assumes a minimum value. Accordingly, the first and second friction members can effectively be prevented from pressing the first and second opposed surfaces when the force controlled by the pressing force control mechanism is 0.

The above-mentioned configuration may be such that: the first and second opposed surfaces have areas where the inclination relative to the virtual plane is 0, and the first and second opposed surfaces on both sides of the areas where the inclination relative to the virtual plane is 0 are inclined in the directions opposite to each other relative to the virtual plane.

According to the configuration, in either case where the first and second opposed surfaces rotate around the rotation axis in one or the other direction, the transmission of the rotational torque by the force transmission mechanism, the generation of the force separating the two pressing members from each other and the transmission of the reaction force of the pressing force between the two pressing members can preferably be effected. Consequently, in either case where the first and second opposed surfaces rotate in one or the other direction, a change can promptly be achieved from the situation where the first and second opposed surfaces oppose to each other in the areas where the inclination is 0 to a situation where they oppose to each other in the areas inclined relative to the vertical plane. Therefore, the generation of braking force can be started with good responsiveness at the time of starting braking operation while preventing unnecessary braking force from being generated during non-braking operation.

The above-mentioned configuration may be such that: the force increasing mechanism includes rolling bodies between the first and second opposed surfaces; the normal position-recovering mechanism includes first and second resilient members which are resiliently disposed between the rolling bodies and the first and second friction members on both sides of the rolling bodies, and are resiliently deformed by the first and second friction members by means of the first and second friction members relatively rotating from the normal positions so as to press the rolling bodies in the opposite directions; and the first and second resilient members position the rolling bodies between the areas where the inclination relative to the virtual plane is 0 in a situation where the force controlled by the pressing force control mechanism is 0.

According to the configuration, when the first and second friction members relatively rotate from the normal positions, the first and second resilient members are resiliently deformed and the resilient force bias and position the rolling bodies between the areas where the inclination relative to the virtual plane is 0. Consequently, it is possible to position the rolling bodies between the areas where the inclination relative to the virtual plane is 0 during the non-braking operation and to effectively reduce a risk that wedge actions are generated by the cooperation of the areas of the first and second opposed surfaces inclined relative to the rotation axis and the rolling bodies.

The above-mentioned configuration may be such that: supporting members are disposed between the first and second resilient members and the first and second friction members, respectively.

According to the configuration, even if the first and second friction members relatively rotate from the normal positions, the first and second resilient members can press the first and second friction members by way of the supporting members. Consequently, as compared to where supporting members are not disposed between the first and second resilient members and the first and second friction members, the rolling bodies can more favorably be biased and returned between the areas where the inclination relative to the virtual plane is 0.

The above-mentioned configuration may be such that: each clearance adjustment mechanism includes wedge members which are supported so as to displace relative to the associated slider in a direction across the direction where the slider displaces relative to the one friction member; and
each actuator includes a pressing member which presses the associated wedge member in the direction where the associated wedge member displace the associated slider toward the other friction member.

According to the configuration, when the clearance between at least one of the first and second friction members and the associated friction surface increases, the associated wedge member is moved in the direction where it displaces the slider toward the other friction member by the pressing member of the actuator. Consequently, it is possible to prevent the clearances between the friction members and the friction surfaces and between the first and second opposed surfaces from increasing excessively without detecting the increase of the clearances and actuating a special actuator.

The above-mentioned configuration may be such that: one of the slider and the wedge member has ratchet teeth on the side opposed to the other of the slider and the wedge member; the other of the slider and the wedge member supports ratchet claw which is resiliently pressed against the ratchet teeth; and the ratchet teeth and the ratchet claw cooperate with each other to prevent the wedge member from displacing relative to the slider in the direction opposite to the depressing direction of the pressing member.

According to the configuration, as each wedge member is pressed by the associated pressing member, when the clearance between at least one of the first and second friction members and the associated friction surface increases, each ratchet claw can pass over the mountain of the ratchet teeth to engage the next volley. Accordingly, this enables to ensure the function of the clearance adjusting mechanism. As the wedge member is prevented from displacing relative to the slider in the direction opposite to the pressing direction by the pressing member, once reduced clearance can be prevented from increasing again due to the relative displacement of the wedge member in the reverse direction.

In addition, when the inclination angle of the mountains of the ratchet teeth is smaller than that of the opposed portions of the wedge member and the slider, a risk can be reduced the slider excessively presses the one friction member due to the pressing force of the pressing member. That is,as compared to where ratchet teeth and a ratchet claw are not provided, the ratio can be reduced in which the pressing force of the pressing member is transformed into the force pressing the one friction member by the slider. Consequently, a risk can be reduced that unnecessary braking force is generated due to the first and second friction members engaging with the associated friction surface during non-braking operation.

### BRIEF DESCRIPTION OF THE DRAWINGS

Fig. 1 is a partial sectional view showing a section of a first embodiment of the friction brake device according to the present invention which is structured as an electromagnetic brake device for a vehicle, as cut along a section passing through a rotation axis.
Fig. 2 is a partial front view showing the first embodiment as viewed from right side in Fig. 1.
Fig. 3 is a partial sectional view which is along III-III in Fig. 2, showing a force transmission mechanism with respect to a situation where a first and second pressing members are in their normal positions.
Fig. 4 is a partial sectional view showing the force transmission mechanism with respect to a situation where the first and second pressing members are relatively displaced.
Fig. 5 is a partial sectional view showing a section of a second embodiment of the friction brake device according to the present invention which is structured as an electromagnetic brake device for a vehicle, as cut along a section passing through a rotation axis.
Fig. 6 is a partial front view showing the second embodiment as viewed from right side in Fig. 5.
Fig. 7 is a partial sectional view which is along VII-VII in Fig. 6.
Fig. 8 is a partial sectional view showing a section of a third embodiment of the friction brake device according to the present invention which is structured as a hydraulic brake device for a vehicle, as cut along a section passing through a rotation axis.
Fig. 9 is a partial front view showing the third embodiment as viewed from right side in Fig. 8.
Fig. 10 is a partial sectional view which is along X-X in Fig. 8.
Fig. 11 is a partial sectional view showing a modification of a rattling suppressing mechanism in the third embodiment.
Fig. 12 is a partial sectional view showing a section of a fourth embodiment of the friction brake device according to the present invention which is structured as an electromagnetic brake device for a vehicle, as cut along a section passing through a rotation axis.
Fig. 13 is a partial front view showing the fourth embodiment as viewed from right side in Fig. 12.
Fig. 14 is an enlarged partial sectional view which is along XIV-XIV in Fig. 13.
Fig. 15 is a partial sectional view showing a section of a fifth embodiment of the friction brake device according to the present invention which is structured as an electromagnetic brake device for a vehicle, as cut along a section passing through a rotation axis.
Fig. 16 is a partial front view showing the fifth embodiment as viewed from right side in Fig. 15.
Fig. 17 is an enlarged sectional view which is along XVII-XVII in Fig. 16.
Fig. 18 is an explanatory view showing the principles of increasing pressing force and suppressing rattling in the brake device according to the present invention.
Fig. 19 is a partial sectional view showing a modification of the cam surface of a force transmission mechanism.
Fig. 20 is a partial sectional view showing another modification of the cam surface of a force transmission mechanism.

### MODE FOR CARRYING OUT THE INVENTION

The present invention will now be described in detail with respect to preferred embodiments by referring to the accompanying drawings.

### First Embodiment

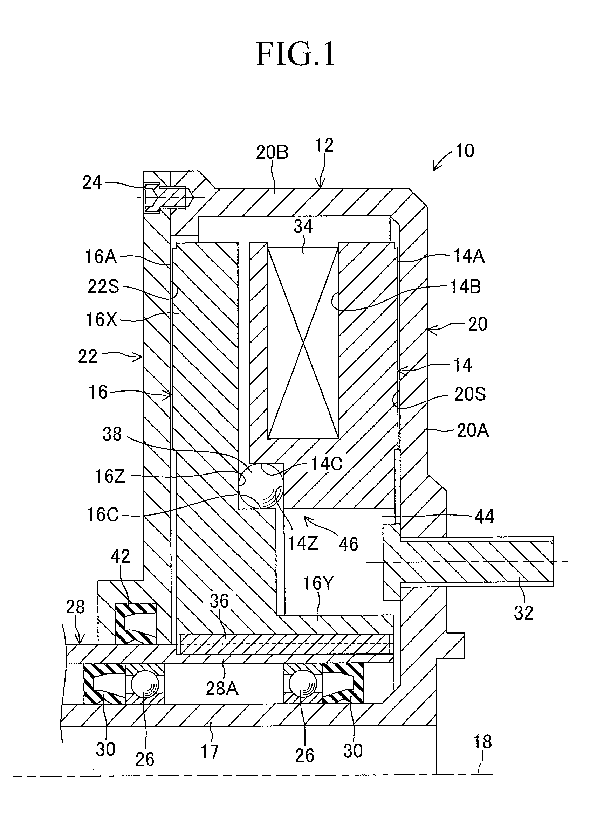

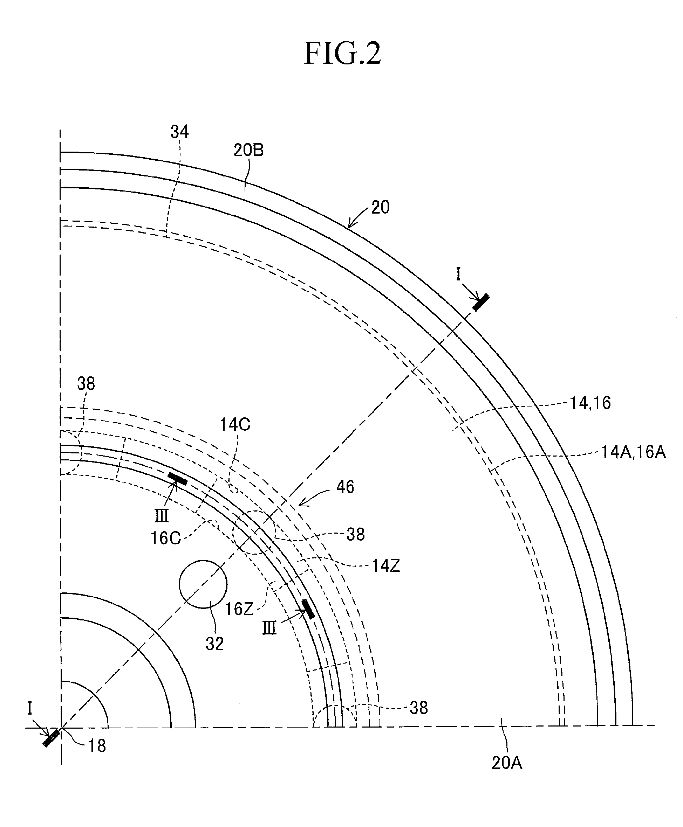

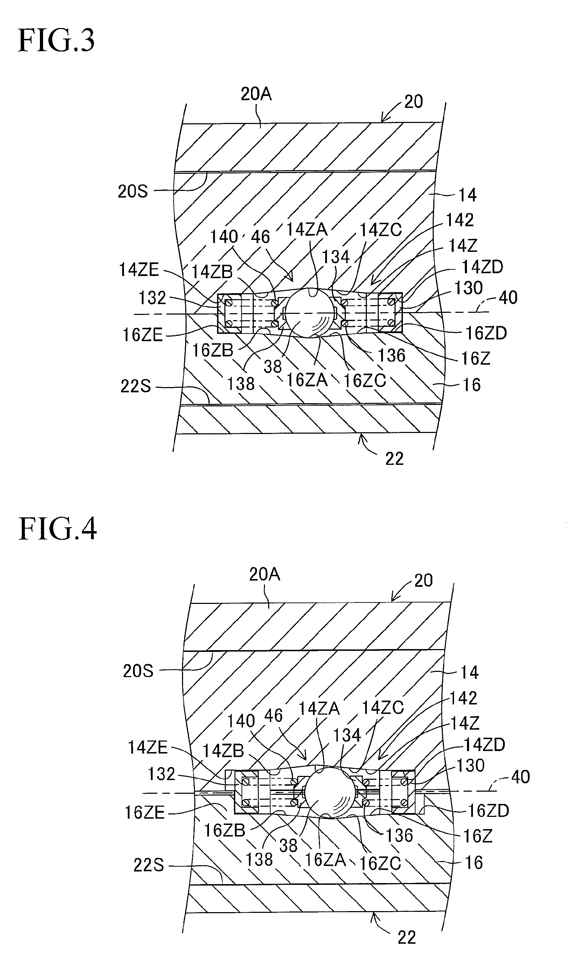

Fig. 1 is a partial sectional view showing a section of a first embodiment of the friction brake device according to the present invention which is structured as an electromagnetic brake device for a vehicle, as cut along a section passing through a rotation axis. Fig. 2 is a partial front view showing the first embodiment as viewed from right side in Fig. 1. Fig. 3 is a partial sectional view which is along III-III in Fig. 2. Notably, Fig. 1 is a sectional view which is along I-I in Fig. 2.

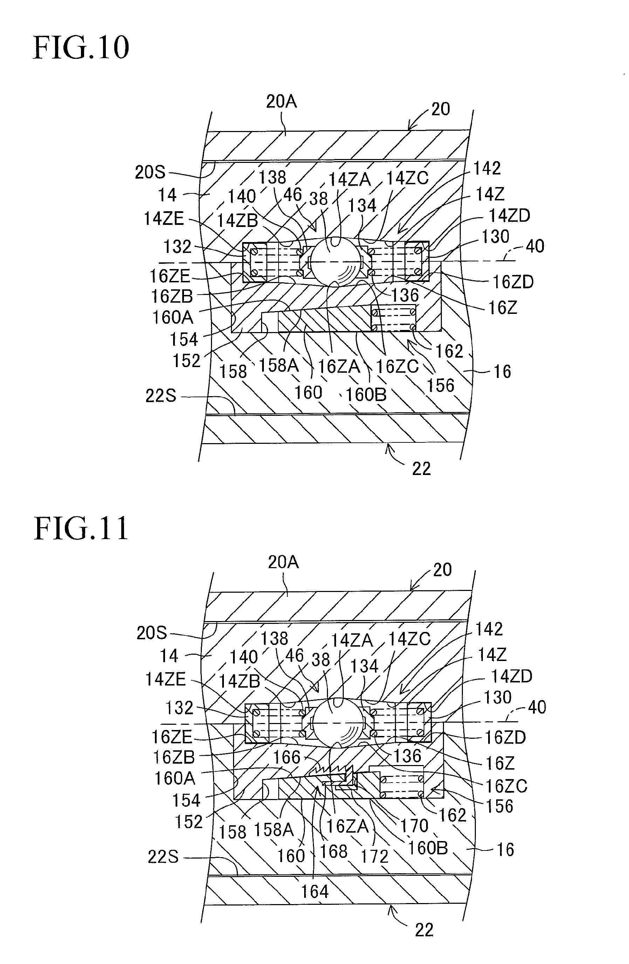

In Fig. 1, 10 denotes a whole of the brake device. The brake device 10 has a brake rotor 12, a first pressing member 14 and a second pressing member 16. The brake rotor 12 rotates around a rotation axis 18 together with a rotating shaft 17 of a vehicle wheel, not shown. In particular, in the illustrated embodiment, the brake rotor 12 has a main rotor 20 which is integral with the rotating shaft 17 and a sub-rotor 22 which rotates integrally with the main rotor. The main rotor 20 and the first pressing member 14 are made from a metal having paramagnetism but the second pressing member 16 and the sub-rotor 22 may be made from a metal having no paramagnetism.

The main rotor 20 has a disk part 20A and a cylindrical part 20B which are spaced apart from each other along the rotation axis 18. The disk part 20A is integrally connected at the inner peripheral portion to the rotating shaft 17 and extends like an annular plate perpendicularly to the rotation axis 18 around the rotation axis 18. The cylindrical part 20B is integrally connected to the outer peripheral portion of the disk part 20A and extends cylindrically around the rotation axis 18. The sub-rotor 22 extends like an annular plate perpendicularly to and around the rotation axis 18 and is coupled at the outer peripheral portion to an end of the cylindrical part 20B opposite to the disk part 20A by a plurality of bolts 24.

It is to be noted that the disk part 20A and the sub-rotor 22 have the same thickness and the thickness of the cylindrical part 20B is smaller than those of the disk part 20A and the sub-rotor 22. However, since the cylindrical part 20B extends cylindrically around the rotation axis 18, it has a rigidity higher that those of the disk part 20A and the sub-rotor 22.

Thus, the disk part 20A and the sub-rotor 22 serve as first and second disk parts, respectively, which extend like an annular plate perpendicularly to and around the rotation axis 18 and are spaced apart along the rotation axis 18. The cylindrical part 20B serves as a connection part which cooperates with the bolts 24 to integrally connect the outer peripheral portions of the disk part 20A and the sub-rotor 22. The disk part 20A, the cylindrical part 20B and the sub-rotor 22 form a staple-like sectional shape which opens radially inwardly as viewed in a radial section passing through the rotation axis 18. The opposed surfaces of the disk part 20A and the sub-rotor 22 define a first friction surface 20S and a second friction surface 22S, respectively, which extend perpendicularly to and around the rotation axis 18 and are parallel to each other.

The rotating shaft 17 is rotatably supported around the rotation axis 18 by a sleeve part 28A of a wheel carrier member 28 serving as a stationary member through a pair of ball bearings 26. The space defined by the pair of ball bearings 26, the rotating shaft 17 and the sleeve part 28A is filled with lubricant such as grease. A pair of seal members 30 are located on both sides in axial direction of the pair of ball bearings 26 and seal the space between the rotating shaft 17 and the sleeve part 28A so that dust and muddy water do not enter the ball bearings 26.

Although not shown in the figure, the disk part 20A of the main rotor 20 is adapted to be integrally coupled to a rim part of the vehicle wheel by four bolts and nuts 32 screwed thereto which are spaced apart by 90° around the rotation axis 18. Consequently, the rotating shaft 17 and the brake rotor 12 (the main rotor 20 and the sub-rotor 22) rotate around the rotation axis 18 together with the vehicle wheel.

The first pressing member 14 has a ring shape which extends around the rotation axis 18 over the entire circumference. The side surface of the first pressing member 14 which opposes to the first friction surface 20S of the disk part 20A is integrally formed with a first frictional engagement portion 14A which serves a first frictional engagement member. The first frictional engagement portion 14A extends like a ring strip around the rotation axis 18 over the entire circumference. The first pressing member 14 has ring groove 14B which extends around the rotation axis 18 over the entire circumference and opens radially outwardly. A solenoid 34 is positioned in the ring groove 14B and annually extends around the rotation axis 18.

Although not shown in the figure, supply of electricity to the solenoid 34 is controlled by an electronic control unit. Notably, braking operation amount of a driver such as depressing force on a brake pedal may be detected and the control electric current supplied to the solenoid 34 may be controlled so that the electric current increases as the braking operation amount increases.

A second pressing member 16 has a ring plate part 16X and a cylindrical part 16Y which are integral with each other. The ring plate part 16X extends around the rotation axis 18 over the entire circumference. The outer peripheral of the ring plate part 16X is spaced apart from the first pressing member 14 and is positioned between the first pressing member 14 and the sub-rotor 22. The side surface of the ring plate part 16X opposite to the first pressing member 14 is integrally formed with a second frictional engagement portion 16A which serves as a second frictional engagement member. The second frictional engagement portion 16A extends like a ring strip around the rotation axis 18 over the entire circumference as opposed to the second friction surface 22S.

It is to be noted that the first and second pressing members 14 and 16 may be produced by, for example, powder metallurgy so that the first frictional engagement portion 14A and the second frictional engagement portion 16A are integrally formed with the first and second pressing members 14 and 16, respectively. Alternatively, the first frictional engagement portion 14A and the second frictional engagement portion 16A may be formed by adhering a ring strip made from frictional material to a side surface of the ring plate part by means of adhesive or other means. Furthermore, although the first frictional engagement portion 14A and the second frictional engagement portion 16A are made from the same frictional material, they may be made from different frictional materials from each other. While the frictional material may be any frictional material having a good durability, it is preferably a frictional material of ceramics having also a good heat-resisting property.

The second pressing member 16 mates with the sleeve part 28A of a wheel carrier member 28 with a small clearance. A key 36 is inserted into key grooves which are provided on the inner surface of the cylindrical part 16Y and the outer surface of the sleeve part 28A and extend along the rotation axis 18. Consequently, the second pressing member 16 is supported by the wheel carrier member 28 so that the member cannot rotate around the rotation axis 18 but can displace along the rotation axis 18.

The ring plate part 16X has a column-like shoulder 16C which faces radially outwardly on the side of the first pressing member 14, which in turn has a column-like shoulder 14C which radially opposes to the shoulder 16C. The shoulders 14C and 16C have radially spaced sections at eight positions which are equally spaced apart from each other around the rotation axis 18. A ball 38 is positioned at each section between the shoulders 14C and 16C. The balls 38 are made from a substantially rigid material such as a metal. Consequently, the first pressing member 14 is supported by the second pressing member 16 via balls 38 so that the first pressing member can rotate around the rotation axis 18 and can displace along the rotation axis 18.

The first and second pressing members 14 and 16 have eight cam surfaces 14Z and 16Z, respectively, in the areas between the shoulders 14C and 16C. The cam surfaces can engage with the associated balls 38. As shown in Fig. 3, the cam surfaces 14Z and 16Z are provided at the circumferential positions where the associated balls 38 are positioned, and extend in arc shapes each having a center in the rotation axis 18.

As shown in Fig. 3, the cam surfaces 14Z has a curved section 14ZA opening toward the second pressing member 16 and planar inclined sections 14ZB and 14ZC extending continuously from the curved section on both sides of the curved section. The inclined sections 14ZB and 14ZC are inclined relative to a virtual plane 40 extending perpendicularly to the rotation axis 18 so that as the distance from the curved section 14ZA increases, the inclined sections approach the the second pressing member 16. In similar, the cam surfaces 16Z has a curved section 16ZA opening toward the first pressing member 14 and planar inclined sections 16ZB and 16ZC extending continuously from the curved section on both sides of the curved section. The inclined sections 16ZB and 16ZC are inclined relative to the virtual plane 40 so that as the distance from the curved section 16ZA increases, the inclined sections approach the first pressing member 14.

In the illustrated embodiment, as shown in Fig. 3, the inclined sections 14ZB and the like have the same inclination in magnitude. In consequence, the inclined sections 14ZB and 16ZC, and 14ZC and 16ZB which oppose to each other in a radial direction of each ball 38 are inclined in the same direction relative to the virtual plane 40 and extend in parallel to each other.

Although not shown in Fig. 2, in the first embodiment, half cylindrical holes 14ZD and 14ZE are provided on the sides of the inclined sections 14ZB and 14ZC opposite to the curved section 14ZA. Similarly, half cylindrical holes 16ZD and 146E are provided on the sides of the inclined sections 16ZB and 16ZC opposite to the curved section 16ZA. These half cylindrical holes extend in the tangential directions. A spring seat member 130 which has a cylindrical shape with a bottom and opens toward the ball 38 is disposed in the half cylindrical holes 14ZD and 16ZD. Similarly, a spring seat member 132 which has a cylindrical shape with a bottom and opens toward the ball 38 is disposed in the half cylindrical holes 14ZE and 16ZE.

A compression coil spring 136 is elastically fitted between the spring seat member 130 and a spring seat member 134 which engages with the ball 38. Similarly, a compression coil spring 140 is elastically fitted between the spring seat member 132 and a spring seat member 138 which engages with the ball 38. As a result, the ball 38 is biased in the opposed directions from the both sides by the compression coil springs 136 and 140, and the first and second pressing members 14 and 16 receive their reaction force acting in the circumferential direction. The spring seat members 130 and 132 function as support members which support the ends of the compression coil springs 136 and 140, respectively, opposite to the ball 38.

Thus, the compression coil springs 136 and 140, the spring seat member 130 and the likes cooperate with the ball 38 to form a normal position-recovering mechanism 142 which positions the first pressing member 14, the second pressing member 16 and the ball 38 in the normal positions shown in Fig.3 during non-braking operation. Notably, the spring force of the compression coil springs 136 and 140 which acts when the first pressing member 14, the second pressing member 16 and the ball 38 are in normal positions is set to such a level as that it is enough to depress the ball 38 from displaces rightward or leftward from the position of the curved sections 14ZA and 16ZA aligned with each other. While in the illustrated embodiment, the normal position-recovering mechanism 142 is provided for each of eight force transmitting mechanisms 46, there may be a force transmitting mechanisms 46 which is not provided with the normal position-recovering mechanism 142. The force transmitting mechanisms 46 will be explained later.

In the illustrated embodiment, as shown in Fig. 1, the inner peripheral portion of the sub-rotor 22 mates with the sleeve part 28A of the wheel carrier member 28. A seal member 42 is positioned between the inner peripheral portion of the the sub-rotor 22 and the sleeve part 28A and extends around the rotation axis 18 over the entire circumference.

Accordingly, the main rotor 20 and the sub-rotor 22 cooperate with the rotating shaft 17, the wheel carrier member 28 and the seal member 42 to form a closed space 44. The first pressing member 14, the second pressing member 16, the solenoid 34 and the balls 38 are positioned in the closed space 44 and the latter is filled with a lubricant. Consequently, frictional force is not substantially generated between the balls and the shoulders 14C and 16C and between the balls 38 and the cam surfaces 14Z and 16Z.

It is to be noted that as shown in Fig. 1, when no electric control current is supplied to the solenoid 34, the first and second pressing members 14 and 16 are positioned in normal positions shown in Fig. 3. When the two pressing members are positioned in the normal positions, the distance between the surfaces of the first frictional engagement portion 14A and the second frictional engagement portion 16A assumes a minimum value and no fore is generated which force to separate the two pressing members from each other. Consequently, the first frictional engagement portion 14A and the second frictional engagement portion 16A do not substantially frictionally engage with the friction surface 20S of the disk part 20A and the second friction surface 22S of the sub-rotor 22.

In the first embodiment, when a braking operation is made by a driver, an electric control current corresponding the braking operation amount is supplied to the solenoid 34 and attractive force acts between the first pressing member 14 and the disk part 20A which is the electromagnetic force generated by the solenoid 34. As a result, the first pressing member 14 is pressed against the disk part 20A, which makes the first frictional engagement portion 14A engage with the friction surface 20S of the disk part 20A. Consequently, the solenoid 34 cooperates with the first pressing member 14 and the disk part 20A to function as a pressing force control mechanism which controls pressing force pressing the first pressing member 14 against the disk part 20A.

If the wheel not shown in the figure is rotating, the first pressing member 14 receives rotational torque around the rotation axis 18 which is generated by he friction force between the first frictional engagement portion 14A and the friction surface 20S of the disk part 20A, and rotates relative to the second pressing member 16 around the rotation axis 18. As a result, the first and second pressing members 14 and 16 relatively rotate in the opposite directions to each other as shown in Fig. 4, which makes the cam surfaces 14Z and 16Z approach each other. However, since the balls 38 cannot compressively deform, so called wedge effect is generated, which makes the first and second pressing members 14 and 16 remove from each other along the rotation axis 18.

That is, the balls 38 and the cam surfaces 14Z, 16Z cooperate with each other to displace the first and second pressing members 14 and 16 in the direction of separating them from each other along the rotation axis 18. Besides, the balls 38 and the cam surfaces 14Z, 16Z cooperate with each other to transmit rotational torque acting around the rotation axis 18 of the first pressing member 14 to the second pressing member 16, and to transform the rotational torque into the force separating the two pressing members from each other. Furthermore, the balls 38 and the cam surfaces 14Z, 16Z transmit reaction force mutually between the two pressing members, the reaction force being generated by means of frictional engagement members being pressed against the associated friction surfaces by the pressing members.

Thus, the balls 38 and the cam surfaces 14Z, 16Z define a force transmitting mechanism 46 which conducts transmission of rotational torque between the first and second pressing members 14 and 16, generation of the force separating the two pressing members from each other along the rotation axis 18, and transmission of the reaction force. The first frictional engagement portion 14A and the second frictional engagement portion 16A are pressed against the friction surface 20S of the disk part 20A and the friction surface 22S of the sub-rotor 22, respectively, by the action of the force transmitting mechanism 46, and thereby frictionally engage with the associated friction surfaces.

It is to be noted that the rotational torque is proportional to the attractive force of the electromagnetic force generated by the solenoid 34 and the force separating the first and second pressing members 14 and 16 from each other is proportional to the rotational torque. Consequently, the pressing force with which the first and second pressing members 14 and 16 act against the disk part 20A and the sub-rotor 22, respectively, is proportional to the braking operation amount of a driver.

The second pressing member 16 is prevented from rotating around the rotation axis 18 relative to the wheel carrier member 28 by the key 36 and the key groove receiving the key. In consequence, the wheel carrier member 28 functions as a rotational torque bearing member bearing the rotational torque which the second pressing member 16 receives from the first pressing member 14.

Thus, according to the first embodiment, during braking, the frictional engagement portions 14A and 16A are pressed against the friction surface 20S of the disk part 20A and the friction surface 22S of the sub-rotor 22, respectively, by means of the solenoid 34 being energized. Consequently, braking force is generated by the friction force between the frictional engagement portions 14A , 16A and the friction surfaces 20S, 22S, respectively.

The reaction torque acting around the rotation axis 18 is transmitted from the first pressing member 14 to the second pressing member 16 by the force transmitting mechanism 46 and is transformed into the force separating the two pressing members from each other by the wedge action of the force transmitting mechanism 46. The rotation force generated by the press of the pressing members 14 and 16 is transmitted to the other of the pressing members via the force transmitting mechanism 46.

Thus, it is possible to effectively utilize the rotational torque of the brake rotor 12 to increase the pressing force by means of the wedge action of the force transmitting mechanism 46, and to increase pressing force by means of transmission of reaction force conducted via the force transmitting mechanism 46. Consequently, since the force transmitting mechanism 46 cooperates with the wheel carrier member 28 serving as a stationary member to function as a force-increasing mechanism, higher braking force can be generated as compared to where no force transmitting mechanism 46 is provided. Notably, this advantageous effect can be obtained as well in the under-described second and third embodiments.

According to the first embodiment, during non-braking operation, no energizing force is generated by the solenoid 34. As a result, the frictional engagement portions 14A and 16A of the pressing members 14 and 16 do not engage with the friction surface 20S of the disk part 20A and the friction surface 22S of the sub-rotor 22, respectively, and no frictional force is generated between the frictional engagement portions 14A and 16A and the friction surfaces 20S and 22S. Consequently, the first pressing member 14, the second pressing member 16 and the ball 38 are positioned in the normal positions shown in Fig. 3 by the action of the normal position-recovering mechanism 142.

In consequence, as compared to where no normal position-recovering mechanism 142 is provided, it is possible to more effectively reduce the risk that a situation occurs during non-braking operation where the first pressing member 14, the second pressing member 16 and the ball 38 shift from their normal positions. Therefore, a risk can effectively be reduced where unnecessary braking force is generated due to the event in which the first pressing member 14, the second pressing member 16 and the ball 38 shift from their normal positions, and a risk can effectively be reduced where occupants of the vehicle feel so called a drag due to the unnecessary braking force.

In addition, as compared to where no normal position-recovering mechanism 142 is provided, it is possible to more effectively reduce the risk that the ball 38 displaces rightward or leftward from the position of the curved sections 14ZA and 16ZA aligned with each other during non-braking operation. Therefore, it is possible to effectively reduce the risk that the position of the ball 38 relative to the cam surfaces 14Z and 16Z varies at the time of starting braking operation and the responsiveness of the brake device 10 in generating braking force varies due to the position variation at the time of starting braking operation.

According to the first embodiment, the structure of the brake device can be simplified in comparison with the brake device described in the above-mentioned Laid-Open Publication where the reaction force generated by pressing a frictional engagement member against a friction surface by means of a pressing member is borne by another member other than the pressing member. Higher braking torque can be generated in comparison with the brake device described in the above-mentioned Laid-Open Publication where a frictional engagement member is pressed against only one friction surface of a brake disk.

In particular, according to the first embodiment, the ends of the compression coil springs 136 and 140 opposite to the ball 38 are supported by the spring seat members 130 and 132 which function as support members. The spring seat members 130 and 132 are accommodated in the cylindrical spaces formed by the half cylindrical holes 14ZD and the likes. Therefore, it is possible to effectively reduce the degree of the deformations of the compression coil springs 136 and 140 at their ends in a situation where the first and second pressing members 14 and 16 are relatively displaced around the rotation axis, which ensures that the ball 38 is preferably biased from the both sides.

In particular, according to the first embodiment, the frictional engagement portions 14A , 16A of the pressing members 14, 16 are constantly in frictional contact with the friction surface 20S of the disk part 20A and the friction surface 22S of the sub-rotor 22, respectively, over the entire circumference around the rotation axis 18. Consequently, it is possible to effectively reduce the possibility that brake vibrations such as flutter, vibration of brake pedal, vibration of a vehicle body and the like occur due to a phenomena where braking torque which a pair of frictional engagement members afford cyclically varies.

In comparison with a conventional friction brake device in which pressing and frictional contact are conducted at a small part of the entire circumference, the possibilities can be reduced that a brake rotor locally deforms cyclically and/or pressing force against the brake rotor varies cyclically. Consequently, risks of vibration and abnormal abrasion of a brake rotor and/or brake squeal can effectively be reduced. Notably, these advantageous effects can be obtained as well in the under-described third and fifth embodiments.

According to the first embodiment, the frictional engagement portions 14A and 16A which are pressed against the friction surface 20S of the disk part 20A and the friction surface 22S of the sub-rotor 22, respectively are integrally formed with the pressing member 14 and 16, respectively. Consequently, in comparison with the under-described second embodiment where the frictional engagement portions 14A and 16A which are pressed against the friction surface 20S of the disk part 20A and the friction surface 22S of the sub-rotor 22, respectively, are formed independently of the pressing members 14 and 16, the number of parts can be reduced and the structure of the brake device can be simplified. Notably, these advantageous effects can be obtained as well in the under-described third and fifth embodiments.

### Second Embodiment

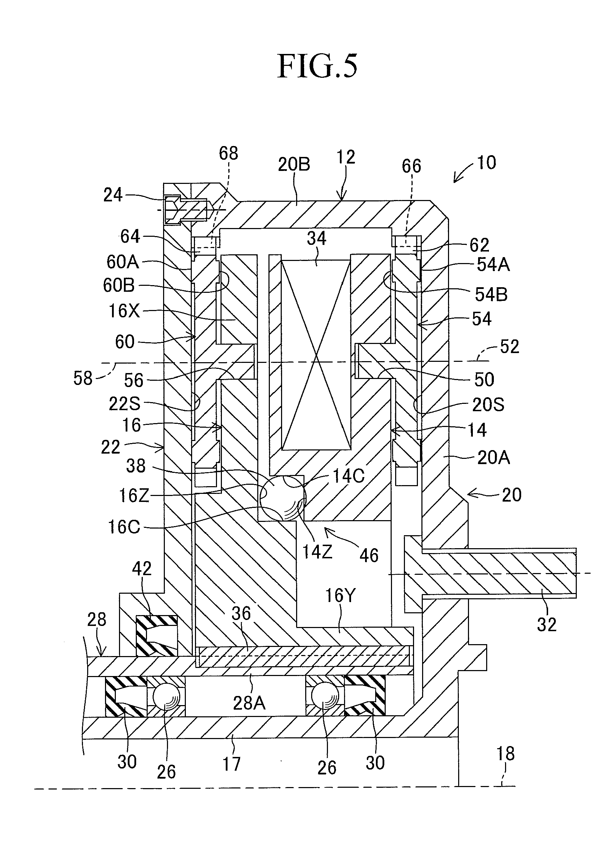

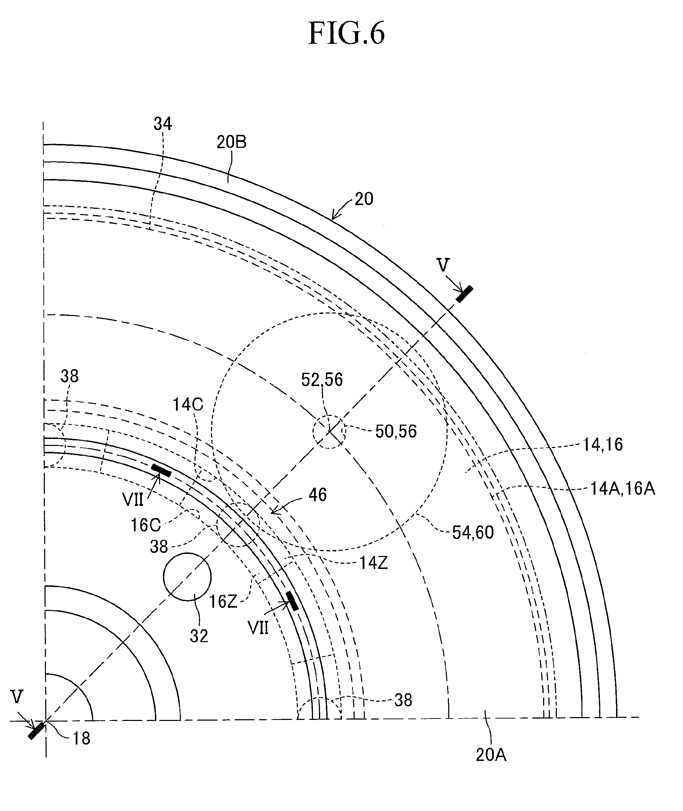

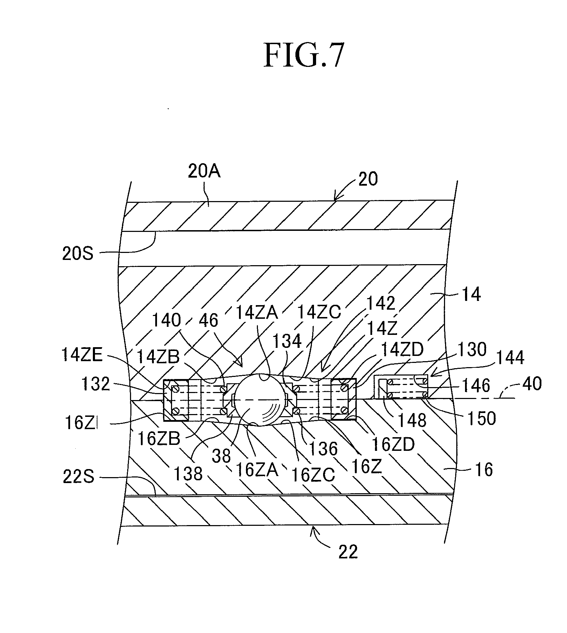

Fig. 5 is a partial sectional view showing a section of a second embodiment of the friction brake device according to the present invention which is structured as an electromagnetic brake device for a vehicle, as cut along a section passing through a rotation axis. Fig. 6 is a partial front view showing the second embodiment as viewed from right side in Fig. 5. Fig. 7 is a partial sectional view which is along VII-VII in Fig. 6. Notably, Fig. 5 is a sectional view which is along V-V in Fig. 6. In Figs. 5 and 6, the same members as those shown in Figs. 1 and 2 are denoted by the same reference numbers as in Figs. 1 and 2.

In the second embodiment, the first pressing member 14 is provided with bearing holes 50 each having a bottom at four positions spaced 90° apart from each other around the rotation axis 18 and each bearing hole 50 extends along an axis 52 which is parallel to the rotation axis 18. Four first frictional engagement members 54 are positioned as aligned with the associated axis 52 between the first pressing member 14 and the disk part 20A of the main rotor 20. In similar, the second pressing member 16 is provided with bearing holes 56 each having a bottom at four positions spaced 90° apart from each other around the rotation axis 18 and each bearing hole 56 extends along an axis 58 which is parallel with the rotation axis 18. Four second frictional engagement members 60 are positioned as aligned with the associated axis 58 between the second pressing member 16 and the sub-rotor 22. In the illustrated embodiment, the axes 52 and 58 are equally spaced from the rotation axis 18.

The frictional engagement members 54 and 60 each have a disk part and a shaft part which are aligned with each other. The disk parts are positioned on the sides of the disk part 20A and the sub-rotor 22. The shaft parts of the frictional engagement members 54 and 60 mate with the bearing holes 50 and 56, respectively, and the frictional engagement members 54 and 60 are supported by the first and second pressing members 14 and 16, respectively, so that the frictional engagement members can rotate around the axes 52 and 58, respectively.

The disk part of each first frictional engagement member 54 has frictional portions 54A and 54B on the opposite sides of its outer peripheral portion. The frictional portions 54A and 54B can frictionally engage with the side surfaces of the disk part 20A and the first pressing member 14, respectively. In similar, the disk part of each second frictional engagement member 60 has frictional portions 60A and 60B on the opposite sides of its outer peripheral portion. The frictional portions 60A and 60B can frictionally engage with the side surfaces of the sub-rotor 22 and the second pressing member 16, respectively. Each frictional portion bulges from the side surface of the associated disk part and extends as an annular strip around the axis of the associated frictional engagement member.

It is to be noted that the first frictional engagement member 54 and the second frictional engagement member 60 may be produced by, for example, powder metallurgy so that the frictional portions are integrally formed with the associated disk parts. Alternatively, the frictional portions may be formed by adhering annular strips made from frictional material to the side surfaces of a disk part by means of adhesive or other means. Furthermore, although the frictional portions 54A, 54B, 60A and 60B are made from the same frictional material, they may be made from different frictional materials from each other. While the frictional material may be any frictional material having a good durability, it is preferably a frictional material of ceramics having also a good heat-resisting property.

External gears 62 and 64 are provided on the circumference of disk parts of the first frictional engagement member 54 and the second frictional engagement member 60, respectively. The external gears 62 and 64 mesh with internal gears 66 and 68, respectively, provided on the inner surface of the cylindrical part 20B of the main rotor 20. Accordingly, the first frictional engagement member 54 and the second frictional engagement member 60 can rotate about the axes 52 and 58, respectively, and can move relative to the cylindrical part 20B of the main rotor 20 around the rotation axis 18 so that the frictional engagement members roll on the inner surface of the cylindrical part 20B of the main rotor 20.

In the illustrated embodiment, as shown in Figs. 6 and 7, a rattling suppressing mechanism 144 which functions as a clearance adjustment mechanism is disposed between two force transmission mechanisms 46 that are adjacent to each other in the circumferential direction. The rattling suppressing mechanism 144 includes a recess 146 which is formed in the surface of the first pressing member 14 opposing the second pressing member 16, and a projection 148 which is provided on the second pressing member 16 and projects into the recess 146. The recess 146 extends arcuately around the rotation axis 18 and the projection 148 is formed as a plate extending radially and along the rotation axis 18.

The rattling suppressing mechanism 144 includes a compression coil spring 150 which is resiliently fitted in a space between the projection 148 and the circumferential end 146E of the recess 146, and the compression coil spring 150 biases the first pressing member 14 relative to the second pressing member 16 rightward as viewed in Fig. 7. Consequently, even if a clearance exists between the ball 38 and the cam surfaces 14Z and 16Z in a situation where the first pressing member 14, the second pressing member 16 and the ball 38 are in their normal positions, the ball 38 is kept in contact with the cam surfaces. Therefore, the rattling suppressing mechanism 144 prevents the ball 38 from rattling between the cam surfaces 14Z and 16Z due to the clearance existing between the ball 38 and the cam surfaces 14Z and 16Z.

It is to be noted that the spring force of the compression coil spring 150 is set to such a level as that it does not excessively displace the first pressing member 14 relative to the second pressing member 16 in the circumferential direction more than a relative displacement required to keep the ball 38 in contact with the cam surfaces during non-braking operation. While in the illustrated embodiment, only one rattling suppressing mechanism 144 is disposed between two force transmission mechanisms 46 that are adjacent to each other in the circumferential direction, a plurality of rattling suppressing mechanisms may be provided. Notably, the second embodiment is structured in other aspects similarly to the above-described first embodiment.

As will be apparent from comparing Figs. 5 to 7 with Figs. 1 to 3, the second embodiment is structured in other aspects similarly to the above-described first embodiment. When the solenoid 34 is not supplied with an electric current; the balls 38 are aligned with the curved parts of the cam surfaces 14Z and 16Z; and the first and second pressing members 14 and 16 are in the normal positions, the axes 52 and 58 are aligned with each other. When the two pressing members are in the normal positions, the distance between the outer surfaces of the first frictional engagement member 54 and the second frictional engagement member 60 along the rotation axis 18 assumes a minimum value and no force is generated which separate the two pressing members.

In the second embodiment, when the brake rotor 12 is rotating around the rotation axis 18, the rotation of the cylindrical part 20B of the main rotor 20 is transmitted to the first frictional engagement member 54 and the second frictional engagement member 60 by way of the meshed portions between the external gears 62, 64 and the internal gears 66, 68, respectively. Accordingly, the first frictional engagement member 54 and the second frictional engagement member 60 rotate about the axes 52 and 58, respectively, and revolve around the rotation axis 18 relative to the disk part 20A and the sub-rotor 22, respectively.

Thus, except that the frictional engagement members 54 and 60 are separate from the pressing members 14 and 16, respectively, and rotate about the axes 52 and 58 relative to the pressing members 14 and 16, respectively, the second embodiment operates similarly to the first embodiment. In addition, the pressing members 14 and 16 cooperate with the frictional engagement members 54 and 60 to function as first and second friction members, respectively. In consequence, according to the second embodiment, as in the first embodiment, higher braking force can be generated than in the brake device described in the above-mentioned Laid-Open Publication.

In particular, according to the second embodiment, the frictional engagement members 54 and 60 frictionally engage on their both side surfaces with the main rotor 20, the sub-rotor 22 and the pressing members 14 and 16, respectively, and rotate about the axes 52 and 58, which enables to generate higher braking force than in the first embodiment. As compared to where the frictional engagement members 54 and 60 do not rotate about their own axes, the risk in which the frictional portions of the frictional engagement members undergo uneven wear can be reduced, which enables to reduce the risk of brake squeal and enhance the durability of the brake device.

According to the second embodiment, in addition to the normal position-recovering mechanism 142 operating similarly in the above-described first embodiment, the rattling suppressing mechanism 144 operates. In consequence, during the non-braking operation, in such a condition where the first pressing member 14 is biased relative to the second pressing member 16 rightward as viewed in Fig. 7 by the rattling suppressing mechanism 144, the ball 38 is positioned in the normal position shown in Fig. 7 by the normal position-recovering mechanism 142. Thus, the same advantageous effects as in the above-described first embodiment can be achieved.

In the course of a long period of time where the brake device 10 is used, the both side surfaces of the frictional engagement members 54 and 60, the friction surfaces 20S and 22S, and the likes are abraded, resulting in that the clearances increase between the first pressing member 14 and the disk part 20A and between the second pressing member 16 and the sub-rotor 22. As a result, the clearance between the first and second pressing members 14 and 16 increases and the clearance between the ball 38 and the curved portions 14ZA and 16ZA of the cam surfaces 14Z and 16Z increases during the non-braking operation. Thus, the first pressing member 14, the second pressing member 16 and the ball 38 are liable to rattle during the non-braking operation and at the start of braking operation.

In contrast, according to the second embodiment, the first pressing member 14 is biased relative to the second pressing member 16 rightward as viewed in Fig. 7 by the rattling suppressing mechanism 144. In consequence, even if clearance is generated between the ball 38 and the cam surfaces 14Z and 16Z, the ball 38 is kept in contact with the inclined sections 16ZB and16ZC of the cam surface during the non-braking operation. Therefore, the first pressing member 14, the second pressing member 16 and the ball 38 are prevented from rattling during the non-braking operation for a long period of time.

For example, when the first pressing member 14 displaces relative to the second pressing member 16 rightward as viewed in Fig. 7, the first and second pressing members 14 and 16 start displacing in a condition where the ball 38 contacts with the inclined sections 16ZB and 16ZC of the cam surface. Thus, it is possible to start generating braking force smoothly at the time of starting braking operation and to reduce the risk that a responsiveness of the brake device in generating braking force is varied due to the above-mentioned clearance at the time of starting braking operation.

Therefore, in the case where the brake device 10 according to the second embodiment is applied to a vehicle, when the first pressing member 14 displaces relative to the second pressing member 16 rightward as viewed in Fig. 7 during the forward travelling of the vehicle, braking force can smoothly be generated from the point of time of starting braking operation. It is to be noted that while, during the backward travelling of the vehicle, no braking force is generated until the condition of the ball 38 changes from being in contact with the inclined sections 16ZB and 16ZC of the cam surface to being the inclined sections 16ZC and 16ZB of the cam surface, the transition period is very short, which does not excessively decrease the responsiveness of braking.

On the other hand, in the case where the brake device 10 according to the second embodiment is applied to a vehicle, when the first pressing member 14 displaces relative to the second pressing member 16 leftward as viewed in Fig. 7 during the forward travelling of the vehicle, there arises a slight delay in generating braking force at the time of starting braking operation. It is to be noted, however, that the delay time is very short, which does not excessively decrease the responsiveness of braking.

As mentioned above, the spring force of the compression coil spring 150 is set to such a level as that it does not excessively displace the first pressing member 14 relative to the second pressing member 16 in the circumferential direction more than a relative displacement required to keep the ball 38 in contact with the cam surfaces during non-braking operation. It is to be understood that unnecessary braking force is not generated due to the presence of the rattling suppressing mechanism 144 and occupants in the vehicle do not feel so called a drag due to the unnecessary braking force.

While in the second embodiment, the rattling suppressing mechanism 144 is provided in addition to the normal position-recovering mechanisms 142, the latter may be omitted. In the illustrated embodiment, the first pressing member 14 is biased relative to the second pressing member 16 rightward as viewed in Fig. 7. However, by resiliently disposing a compression coil spring on the side opposite to the compression coil spring 150 relative to the projection 148, the first pressing member 14 may be biased leftward as viewed in Fig. 7 relative to the second pressing member 16.

### Third Embodiment

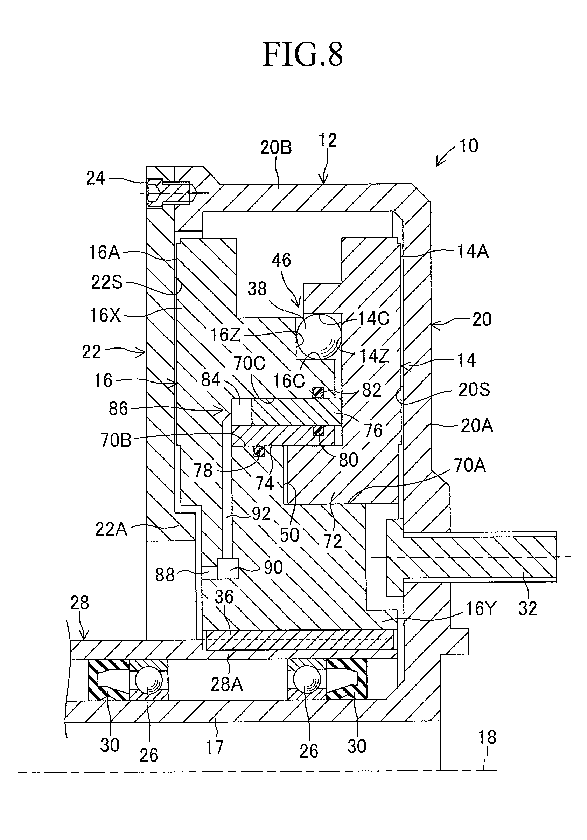

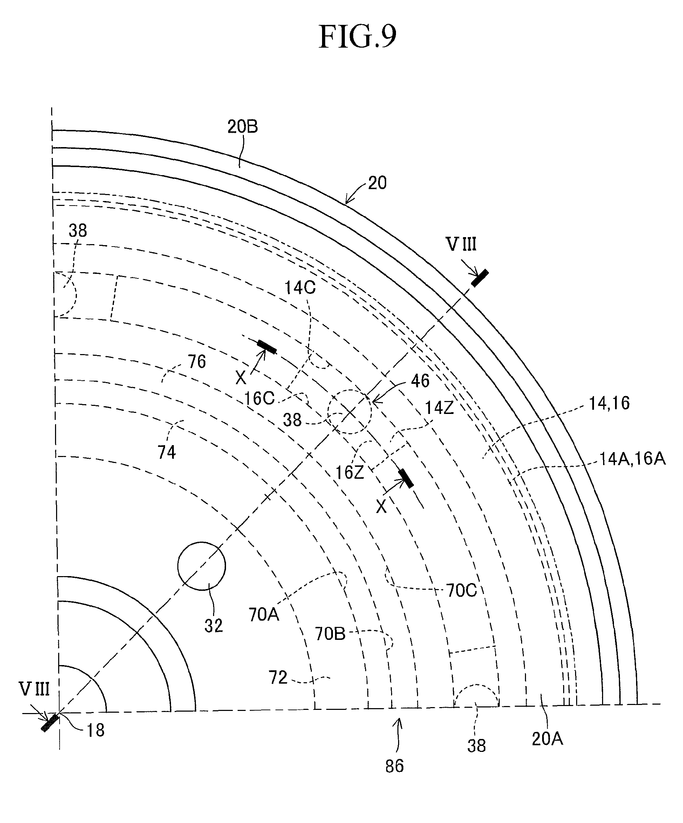

Fig. 8 is a partial sectional view showing a section of a third embodiment of the friction brake device according to the present invention which is structured as a hydraulic brake device for a vehicle, as cut along a section passing through a rotation axis. Fig. 9 is a partial front view showing the third embodiment as viewed from right side in Fig. 8. Fig. 10 is a partial sectional view which is along X-X in Fig. 8. Notably, Fig. 8 is a sectional view which is along VIII-VIII in Fig. 9. In Figs. 8 to 10, the same members as those shown in Figs. 1 to 3 are denoted by the same reference numbers as in these figures.

In the third embodiment, the inner peripheral portion of the sub-rotor 22 does not engage with the wheel carrier member 28, and, on the radially outer side of the wheel carrier member 28, has a cylindrical part 22A extending along the rotation axis 18 toward the disk part 20A. The tip end of the cylindrical part 22A is spaced apart from the second pressing member 16.

The second pressing member 16 has a stepped cylindrical hole 70 on the side of the first pressing member 14. The cylindrical hole 70 extends around the rotation axis 18 over the entire circumference and along the rotation axis 18. The first pressing member 14 has a cylindrical part 72 at its inner peripheral portion, which extends around the rotation axis 18 over the entire circumference and along the rotation axis 18. The cylindrical part 72 mates with a radially inwardly positioned cylindrical outer surface 70A of the cylindrical hole 70 so that the part can rotate around the rotation axis 18 and can relatively displace along the rotation axis 18.

A cylindrical body 74 mates substantially snugly with a radially outwardly positioned cylindrical outer surface 70B of the cylindrical hole 70. The cylindrical body 74 extends around the rotation axis 18 over the entire circumference and along the rotation axis 18. A cylindrical piston 76 is positioned between the cylindrical body 74 and a cylindrical inner surface 70C of the cylindrical hole 70. The piston 76 extends as well around the rotation axis 18 over the entire circumference and along the rotation axis 18. The piston 76 mates substantially snugly with the cylindrical body 74 and the cylindrical inner surface 70C so that the piston can displace along the rotation axis 18 relative to the cylindrical body 74 and the second pressing member 16.

The clearance between the radially outwardly positioned cylindrical outer surface 70B and the cylindrical body 74 is sealed by an O-ring seal 78. The clearances between the cylindrical body 74 and the piston 76 and between the cylindrical inner surface 70C and the piston 76 are sealed by O-ring seals 80 and 82, respectively. Thus, the second pressing member 16, the cylindrical body 74 and the piston 76 define a hydraulic piston-cylinder device 86 having a cylinder chamber 84 which extends around the rotation axis 18 over the entire circumference.

The second pressing member 16A is provided with a port 88 which is communicatingly connected with a master cylinder (not shown). The port 88 communicates with an annular passage 90 which extends around the rotation axis 18 over the entire circumference within the second pressing member 16. The annular passage 90 in turn is communicatingly connected with the cylinder chamber 84 by a plurality of radial passages 92 which extends radially within the second pressing member 16. Thus, the cylinder chamber 84 is supplied with a master cylinder pressure by way of the port 88, the annular passage 90 and the radial passages 92.

Thus, the hydraulic piston-cylinder device 86 functions as a part of pressing control mechanism which presses both the first and second pressing members 14 and 16 against the disk part 20A and the sub-rotor 22, respectively, in the opposite directions to each other. As the pressing force corresponds to the pressure in the cylinder chamber 84 , i.e., a master cylinder pressure, it corresponds to a braking operation amount of a driver.

In the third embodiment, a force transmitting mechanism 46 is also provided which achieves the same function as the force transmitting mechanism 46 in the first embodiment. It is to be noted that although the force transmitting mechanism 46 is located on the radially outer side relative to the hydraulic piston-cylinder device 86, it may be located on the radially inner side relative to the hydraulic piston-cylinder device 86. Notably, the third embodiment is structured in other aspects similarly to the above-described first embodiment.

As shown in Fig. 10, in this embodiment, the cam surface 16Z of the force transmission mechanism 46 is not formed on the second pressing member 16 but is formed in the surface of a slider 152 which opposes to the first pressing member 14. The slider 152 fits in a guide groove 154 formed in the second pressing member 16 and is supported so that the slider can displace relative to the second pressing member 16 along the rotation axis 18 and it cannot rotate relative to the second pressing member 16 around the rotation axis 18. The slider 152 and the guide groove 154 arcuately extend around the rotation axis 18 and extend along the rotation axis 18.

A rattling suppressing mechanism 156 is provided in the slider 152 which depresses the ball 38 from rattling between the cam surfaces 14Z and 16Z due to the clearance between the cam surfaces. The rattling suppressing mechanism 156 includes a recess158 formed in the slider 152 on the side opposite to the force transmission mechanism 46 and has an inclined surface 158A extending inclined relative to the virtual plane 40.

A wedge member 160 is disposed in the recess 158 so that it can displace in the circumferential direction relative to the second pressing member 16 and the slider 152. The wedge member 160 is trapezoidal in shape having an inclined surface 160A that is parallel to the inclined surface 158A and a side surface 160B that is parallel to the virtual plane 40. Besides, the wedge member 160 is shorter in length than the recess 158 and a compression coil spring 162 serving as an actuator is resiliently fitted between the lower base end of the wedge member 160 and the side surface of the guide groove 154. The spring force of the compression coil spring 162 is set to such a value as that it presses the slider 152 against the ball 38 but it does not substantially press the first pressing member 14 against the disk part 20A.

Incidentally, the surfaces of the slider 152 and the guide groove 154 that mutually abut on are made smooth by surface finishing so that they substantially generate no frictional force. In similar, the inclined surface 160A of the wedge member 160 and the inclined surface 158A of the recess 158 that mutually abut on are as well made smooth by surface finishing so that they substantially generate no frictional force. Notably, the third embodiment is structured in other aspects similarly to the above-described first embodiment.

Upon the first pressing member 14 is pressed against the disk part 20A by the pressing force of the hydraulic piston-cylinder device 86 and frictionally engages with the friction surface 20S of the disk part 20A, the pressing member receives rotational torque from the disk part 20A. In similar, upon the second pressing member 16 is pressed against the sub-rotor 22 by the pressing force of the hydraulic piston-cylinder device 86 and frictionally engages with the second friction surface 22S of the sub-rotor 22, the pressing member receives rotational torque from the sub-rotor 22.

As the first pressing member 14 is supported by the second pressing member 16 so as to rotate around the rotation axis 18, the first pressing member rotates around the rotation axis 18. On the other hand, as the second pressing member 16 is supported so that it can relatively displace along the rotation axis 18 but cannot rotate around the rotation axis 18, the second pressing member does not rotate around the rotation axis 18. Accordingly, the first and second pressing members 14 and 16 rotate relatively to each other around the rotation axis 18.

Thus, as in the first embodiment, a part of the rotational torque transmitted to the first pressing member 14 is transformed by the force transmitting mechanism 46 into the force which presses the first and second pressing members 14 and 16 so as to separate them from each other along the rotation axis 18. Consequently, this increases the force pressing the first and second pressing members 14 and 16 against the disk part 20A and the sub-rotor 22, respectively. The force that the first and second pressing members 14 and 16 receive from the disk part 20A and the sub-rotor 22, respectively, are transmitted to the other pressing member, and thereby act as effective pressing force.

As is apparent from the above description, in this embodiment, the piston-cylinder device 86 functions as a pressing force control mechanism which cooperates with the first and second pressing members 14 and 16 to press these pressing members against the disk part 20A and the sub-rotor 22, respectively.

The pressing force that is generated by the piston-cylinder device 86 is proportional to a braking operation amount of a driver, and the pressing force which is increased by the force transmitting mechanism 46 is proportional to the pressing force that is generated by the piston-cylinder device 86. As a result, the pressing force which presses the first and second pressing members 14 and 16 against the disk part 20A and the sub-rotor 22, respectively, is proportional to a braking operation amount of the driver.

Therefore, according to the third embodiment, advantageous effects similar to those of the above-described first embodiment can be obtained. That is, in comparison with the brake device described in the above-mentioned Laid-Open Publication, the structure of the brake device can be simplified and higher braking torque can be generated.

In particular, according to the third embodiment, the piston-cylinder device 86 presses the first and second pressing members 14 and 16 against the disk part 20A and the sub-rotor 22, respectively. Consequently, in comparison with the other embodiments in which the pressing force control mechanism presses only one of the pressing members against the disk part 20A or the sub-rotor 22, braking force can be generated with good responsiveness from the time point of starting the control.

In addition, according to the third embodiment, the slider 152 is pressed against the ball 38 by means of the wedge member 160 being pressed by the compression coil spring 162. Consequently, during the non-braking operation, the ball 38 is positioned in the normal position and is kept in contact with the curved sections 14ZA and 16ZA of the cam surfaces 14Z and 16Z. Therefore, as the rattling suppressing mechanism 156 functions as a clearance adjustment mechanism, the first pressing member 14, the second pressing member 16 and the ball 38 can be prevented from rattling during the non-braking operation and at the time of starting the braking operation, which enables to smoothly start generating braking force at the time of starting the braking operation.

In the course of a long period of time where the brake device 10 is used, the frictional engagement portions 14A and 16A and the friction surfaces 20S and 22S are abraded, resulting in that the clearances increase between the first pressing member 14 and the disk part 20A and between the second pressing member 16 and the sub-rotor 22. According to the third embodiment, however, even if the frictional engagement portions 14A and 16A and the friction surfaces 20S and 22S are abraded, as the slider 152 is pressed against the ball 38 by the wedge member 160, the clearance between the ball 38 and the curved portions 14ZA and 16ZA is not increased. In consequence, the first pressing member 14, the second pressing member 16 and the ball 38 can be prevented for a long period of time from rattling during the non-braking operation and at the time of starting the braking operation, which enables to smoothly start generating braking force at the time of starting the braking operation.

In particular, according to the third embodiment, the slider 152 is pressed against the ball 38 along the rotation axis 18. As a result, during the non-braking operation, the ball 38 and the curved portions 14ZA and 16ZA are kept in contact with each other in the condition where the first pressing member 14, the second pressing member 16 and the ball 38 are positioned in their normal positions. Consequently, irrespective of the direction in which the first pressing member 14 is displaced relative to the second pressing member 16 in the braking operation, it is possible to smoothly start generating braking force at the time of starting the braking operation.

As mentioned above, the spring force of the compression coil spring 162 is set to such a level as that it does not substantially displace the first pressing member 14 relative to the second pressing member 16. Accordingly, the first pressing member 14 does not functionally engage with the disk part 20A during the non-braking operation due to the wedge member 160 pressing the slider 152 against the ball 38 so that the unnecessary braking force is not generated.

According to the third embodiment, only a pressure in the master cylinder that is not shown in the figure needs to be introduced into the cylinder chamber 84 of the piston-cylinder device 86. In consequence, the brake device according to the third embodiment can be applied to a hydraulic brake device which does not require detecting a braking operation amount of a driver.

### First Modification

Fig. 11 is a sectional view showing a modification of the rattling suppressing mechanism of the third embodiment. In Fig. 11, the same members as those shown in Fig. 10 are denoted by the same reference numbers as in Fig. 10.

In this modification, the rattling suppressing mechanism 156 is provided with a ratchet mechanism 164. The ratchet mechanism 164 includes a ratchet teeth 166 formed on the inclined surface 158A of the recess 158 provided in the slider 152 and a ratchet claw 168 which is supported by the wedge member 160 and engages with the ratchet teeth 166. In the illustrated embodiment, the ratchet claw 168 has a supporting portion extending in a circumferential direction and an arm portion which is integral with the supporting portion and extending along the rotation axis 18, and the supporting portion is supported by the wedge member 160.

The ratchet claw 168 is made from a resiliently deformable material. The supporting portion and a part of the arm portion are positioned in a groove 170 formed in the wedge member 160 and are spaced apart from the wall faces of the groove 170. A leaf spring 172 having an L-shape is disposed in the groove 170, and the ratchet claw 168 is biased toward the force transmitting mechanism 46 so that the tip end of the arm portion engages with the ratchet teeth 166. The ratchet teeth 166 and the tip end of the arm portion are saw-toothed so that the wedge member 160 is allowed to displace relative to the second pressing member 16 and the slider 152 leftward as viewed in Fig. 11 but is prevented from relatively moving in the reverse direction. As shown in Fig. 11, the inclination angle of the inclined surface of the ratchet teeth 166 is larger than that of the inclined surface 158A of the recess 158 provided in the slider 152.

As will be understood from the above, in addition to advantageous effects similar to those of the above-described third embodiment being able to be obtained with respect to the force transmitting mechanism 46 and the rattling suppressing mechanism 156, the advantageous effects can be achieved by the ratchet mechanism 164. That is, the wedge member 160 is biased leftward as viewed in Fig. 11 by the spring force of the compression coil spring 162. However, the inclination angle of the inclined surface of the ratchet teeth 166 is larger than that of the inclined surface 158A of the recess 158 provided in the slider 152.

In consequence, even in a situation where the spring force of the compression coil spring 162 is the same as in the third embodiment, the force with which the slider 152 is pressed against the ball 38 by means of the wedge member 160 being biased leftward as viewed in Fig. 11 by the spring force of the compression coil spring 162 is smaller than that in the third embodiment. Therefore, in comparison with the third embodiment, a risk can be reduced that the first pressing member 14 is pressed against the disk part 20A during the non-braking operation due to the wedge member 160 pressing the slider 152 against the ball 38 and that the unnecessary braking force is generated due to the pressing.

As long as the clearances between the first pressing member 14 and the disk part 20A and the like do not exceed the value which allows the tip end of the arm portion 168B to clear the ratchet teeth 166, the wedge member 160 do not displace relative to the second pressing member 16 and the slider 152 leftward as viewed in Fig. 11. If the tip end of the arm portion 168B once clears the ratchet teeth 166, the tip end never returns to the original position over the ratchet teeth 166. Accordingly, the spring force of the compression coil spring 162 may be larger than that in the third embodiment, which enables to prevent the first pressing member 14, the second pressing member 16 and the ball 38 from rattling during the non-braking operation and at the time of starting the braking operation for a long period of time.

In the illustrated embodiment, the ratchet teeth 166 is formed in the inclined surface 158A of the recess 158 provided in the slider 152 and the ratchet claw 168 is supported by the wedge member 160. However, the ratchet teeth 166 may be formed in the inclined surface of the wedge member 160 and the ratchet claw 168 may be supported by the slider 152.

### Fourth Embodiment

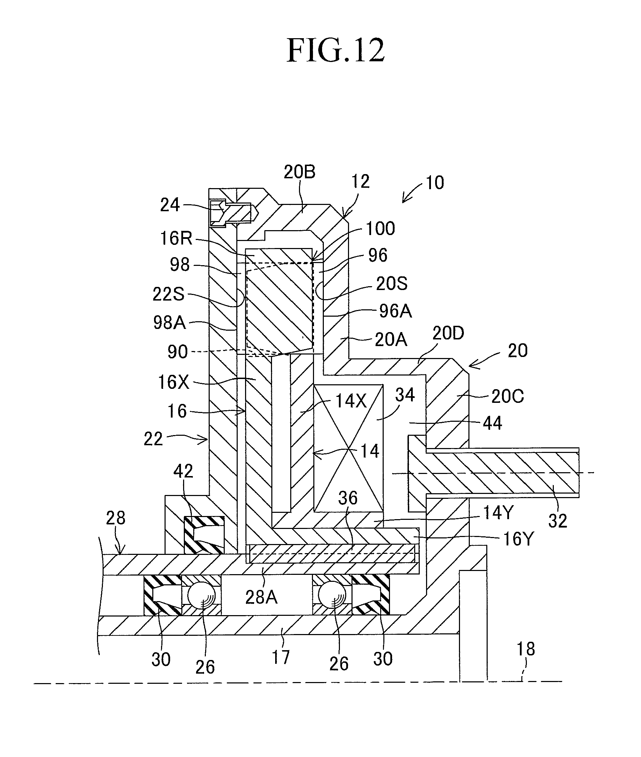

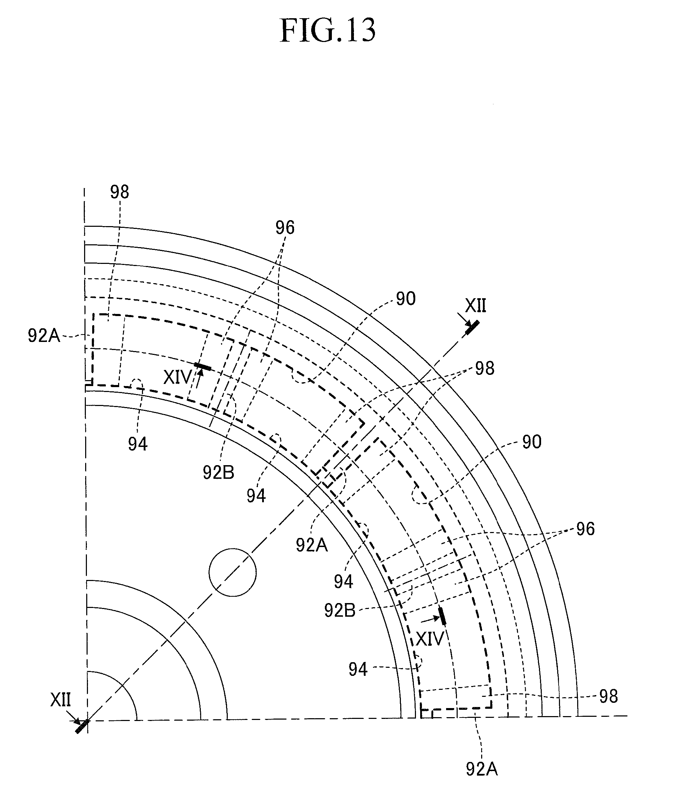

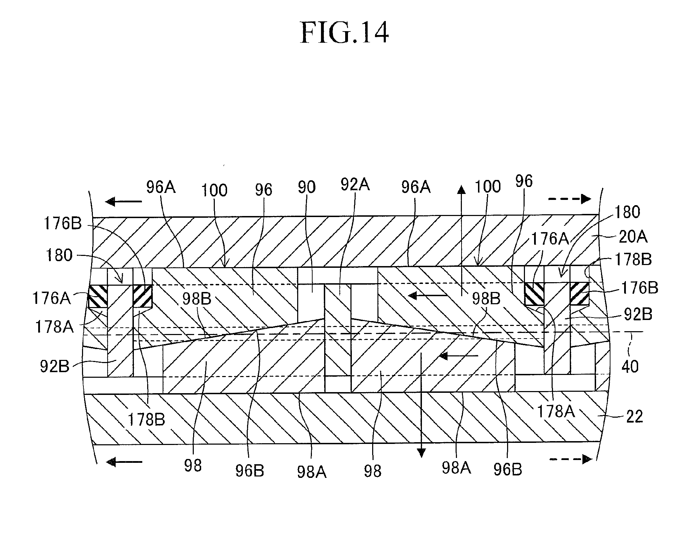

Fig. 12 is a partial sectional view showing a section of a fourth embodiment of the friction brake device according to the present invention which is structured as an electromagnetic brake device for a vehicle, as cut along a section passing through a rotation axis. Fig. 13 is a partial front view showing the fourth embodiment as viewed from right side in Fig. 12. Fig. 14 is a partial sectional view which is along XIV-XIV in Fig. 13. Notably, Fig. 12 is a sectional view which is along XII-XII in Fig. 13. In Figs. 12 to 14, the same members as those shown in Figs. 1 to 3 are denoted by the same reference numbers as in these figures.

In the fourth embodiment, the first pressing member 14 has an annular plate part 14X and a cylindrical part 14Y which are integral with each other, and the annular plate part 14X extends around the rotation axis 18 over the entire circumference. A solenoid 34 is disposed around the cylindrical part 14Y. The solenoid 34 extends annularly around the rotation axis 18 as secured to the annular plate part 14X and the cylindrical part 14Y. The cylindrical part 14Y mates with the cylindrical part 16Y of the second pressing member 16 so that the cylindrical part 14Y can rotate relative to the cylindrical part 16Y and can displace relative to the cylindrical part 16Y along the rotation axis 18. Thus, the first pressing member 14 is supported by the second pressing member 16 so that the first pressing member can rotate relatively around the rotation axis 18 and can displace relatively along the rotation axis 18.

As shown in Fig. 12, as the solenoid 34 is disposed radially inwardly than in the first and second embodiments, the disk part 20A of the main rotor 20 is closer to the sub-rotor 22 than a coupling part 20C which is coupled to a rim part of a vehicle wheel is. The disk part 20A and the coupling part 20C are integrally connected by a cylindrical part 20D extending along the rotation axis 18.

The outer peripheral portion of the second pressing member 16 is integrally provided with a rim part 16R, which is thicker than the annular plate part 16X and projects toward the first pressing member 14. The rim part 16R extends around the rotation axis 18 over the entire circumference. The inner diameter of the portion which projects toward the first pressing member 14 gradually increases toward its tip end so that the inner surface of the portion is tapered.

As shown in Figs. 13 and 14, the rim part 16 is provided with eight through holes 90 equally spaced apart circumferentially and each through hole 90 extends arcuately around the rotation axis 18. Partition walls 92A are provided between the through holes 90. The partition walls 92A extend radially and along the rotation axis 18. The radially inner surfaces and radially outer surfaces of the through holes 90 are cylindrical extending along the rotation axis 18.

Eight partition walls 92B equally spaced apart circumferentially are formed with the outer peripheral portion of the annular plate part 14X of the first pressing member 14. Each partition wall 92B has substantially the same thickness and extends radially and along the rotation axis 18. Each partition wall 92B is fit into the associated through hole 90 so that each through hole 90 is divided into two so as to form sixteen arcuate holes 94 spaced apart circumferentially. The part of each partition wall 92B which Is located on the side of the second pressing member 16 is tapered toward its tip end so as to be easily inserted into the associated through hole 90.

In each arcuate hole 94, a first wedge member 96 is disposed adjacently to the disk part 20A and a second wedge member 98 is disposed adjacently to the sub-rotor 22. The wedge members 96 and 98 extend arcuately around the rotation axis 18 and fit in the associated arcuate holes 94. The circumferential lengths of the wedge members 96 and 98 are the same to each other and are shorter than a half of the value which is derived by subtracting the thickness of the partition walls 92B from the circumferential length of the through holes 90. In addition, the radius of the outer cylindrical surface of each wedge member is insignificantly smaller than that of the inner cylindrical surface of the associated through hole 90 and the radius of the inner cylindrical surface of each wedge member is insignificantly larger than that of the outer cylindrical surface of the associated through hole 90. In consequence, the wedge members 96 and 98 can rotate around the rotation axis 18 relative to the first and second pressing members 14 and 16, and can linearly displace along the rotation axis 18 relative to the first and second pressing members 14 and 16.

It is to be noted that the first wedge member 96 is formed from a paramagnetism material as the first pressing member 14 is. Accordingly, when an electric control current is supplied to the solenoid 34 and the first pressing member 14 is magnetized, the first wedge member 96 is as well magnetized, which is pressed against the disk part 20A by a magnetic attractive force that acts on the disk part 20A.

As shown in Fig. 14, the wedge members 96 and 98 are trapezoidal in sections along the circumference around the rotation axis 18. The side surfaces 96A and 98A of the wedge members 96 and 98 which are adjacent to the first and second pressing members 14 and 16, respectively, extend along the virtual plane 40 perpendicular to the rotation axis 18. While on the other hand, the side surfaces 96B and 98B of the wedge members 96 and 98 which are opposite to the first and second pressing members 14 and 16, respectively, are inclined by the same angle relative to the virtual plane 40 perpendicular to the rotation axis 18.

Each wedge member 96 is disposed so that the lower base of the trapezoid is disposed on the side of the associated partition wall 92B and the upper base of the trapezoid is disposed on the side of the associated partition wall 92A. Each wedge member 96 is disposed so that it can contact with the associated partition wall 92B at its surface of the lower base of the trapezoid, but the surface of the upper base of the trapezoid is spaced apart circumferentially from the associated partition wall 92A. While on the other hand, each wedge member 98 is disposed so that the lower base of the trapezoid is disposed on the side of the associated partition wall 92A and the upper base of the trapezoid is disposed on the side of the associated partition wall 92B. Each wedge member 98 is disposed so that it can contact with the associated partition wall 92A at its surface of the lower base of the trapezoid, but the surface of the upper base of the trapezoid is spaced apart circumferentially from the associated partition wall 92B.

The side surfaces 96A and 98A of the wedge members 96 and 98 are defined by the first and second frictional engagement portions which function as first and second frictional engagement members, and the first and second frictional engagement portions are integrally formed with the first and second pressing members 14 and 16, respectively. Consequently, in a situation where the brake rotor 20 is rotating, when the wedge members 96 and 98 are pressed against the disk part 20A and the sub-rotor 22, respectively, the side surfaces 96A and 98A of the wedge members 96 and 98 frictionally engage with the disk part 20A and the sub-rotor 22.

In contrast, the side surfaces 96B and 98B of the wedge members 96 and 98 are made smooth by surface finishing. In consequence, even when the wedge members 96 and 98 which are disposed in the common arcurate hole 94 are relatively moved circumferentially so that the lower bases of their trapezoids approach to each other, no excessive frictional force is generated at the side surfaces 96B and 98B. It is to be noted that the side surfaces 96B and 98B are preferably surface treated so as not to stick with each other.

As shown in Fig. 14, biasing members 176A and 176B made from a resilient material such as rubber or the like are disposed on the both sides of each partition wall 92B and are secured to the side surface of the partition wall 92B by means of an adhesive or the like. The biasing members176A and 176B fit in the associated notches 178A and 178B, respectively, formed in the bottom base ends of the wedge members 96 and bias the wedge members 96 against the partition walls 92B.

Thus, during the non-braking operation where the solenoid 34 is not supplied with the control electric current, the wedge members 98 are kept in contact with the partition walls 92A by the wedge members 96 and the side surfaces 96B and 98B are kept in contact with each other. The biasing members 176A and 176B cooperate with the partition walls 92A and 92B to form a rattling suppressing mechanism 180, i.e., a clearance adjustment mechanism which prevent the wedge members 96 and 98 from rattling in the associated through holes 90 during the non-braking operation and at the time of starting the braking operation.

It is to be noted that during the non-braking operation, each partition wall 92B is positioned at the center of the associated through hole 90 and the circumferential lengths of the arcuate holes 94 which are circumferentially adjacent to each other are the same to each other. The pressing members 14, 16 and the wedge members 96, 98 are positioned in their normal positions shown in Fig. 14 during the non-braking operation. The pressing force with which the biasing members 176A and 176B press the wedge members 96 is set to such a level as that the wedge members 96 and 98 do not press the disk part 20A and the sub-rotor 22, respectively, and do not make them frictionally engage with each other.

In the fourth embodiment, the wedge members 96 and 98 cooperate with the arcuate holes 94 and the partition walls 92A and 92B to define a force transmitting mechanism 100 which functions similarly to the force transmitting mechanism 46 in the first to third embodiments. Accordingly, as in the first to third embodiments, the pressing force of the wedge members 96 and 98 acting against the disk part 20A and the sub-rotor 22 are increased.

For example, in a situation where, as shown by an arrow of a bold solid line in Fig. 14, the disk part 20A and the sub-rotor 22 are moved leftward as viewed in Fig. 14, when the solenoid 34 is supplied with the control electric current, the first wedge members 96 are pressed against the disk part 20A. As the side surfaces 96A of the first wedge members 96 frictionally engage with the disk part 20A, the first wedge members 96 are moved leftward. Consequently, the first wedge members 96 located on the right side of the partition walls 92A transmit rotational torques to the wedge members 98.

However, as the partition walls 92A are parts of the second pressing member 16 that cannot rotate around the rotation axis 18, the wedge members 96 and 98 which are located on the right side of the partition walls 92A cannot freely move leftward as viewed in Fig. 14. As a result, a part of the rotational torque is transformed into the force for pressing the wedge member 98 against the sub-rotor 22 by means of the wedge action generated by the cooperation of the side surfaces 96B and 98B, which makes the side surfaces 98A of the wedge members 98 frictionally engage with the sub-rotor 22. Thus, raking force is generated by the frictional engagement between the side surfaces 96A and the disk part 20A and the frictional engagement between the side surfaces 98A and the sub-rotor 22.

The reaction force which is generated as a result that the first wedge members 96 press the disk part 20A is transmitted to the second wedge member 98 and the reaction force which is generated as a result that the second wedge members 98 press the sub-rotor 22 is transmitted to the first wedge members 96. Therefore, as in the first to third embodiments, pressing force can be enhanced by effectively utilizing the reaction force and no special member is required to bear the reaction force.

Incidentally, the first wedge members 96 disposed on the left side of the partition walls 92A transmit rotational torque to the partition walls 92B but cannot transmit rotational torque to the second wedge members 98. However, as the partition walls 92B are part of the first pressing member 14 which can rotate around the rotation axis 18, they can move leftward as viewed in Fig. 14. Accordingly, the first wedge members 96 disposed on the left side of the partition walls 92A can transmit rotational torques to the first wedge members 96 disposed on the left side of the partition walls 92B by way of the partition walls 92B. Therefore, the rotational torque which is received by the first wedge members 96 disposed on the left side of the partition walls 92A are effectively utilized to increase the pressing force.

Notably, in a situation where, as shown by an arrow of a broken line in Fig. 14, the disk part 20A and the sub-rotor 22 are moved rightward as viewed in Fig. 14, the same operation as above can occur. That is, except that the directions are reversed, the wedge members 96 and 98 disposed on the left side of the partition walls 92A function similarly to the wedge members 96 and 98 disposed on the right side of the partition walls 92A in a situation where the disk part 20A and the sub-rotor 22 are moved leftward as viewed in Fig. 14.

As is understood from the above, according to the fourth embodiment, as in the other embodiments described above, higher braking torque can be generated than in the brake device described in the above-mentioned Laid Open Publication.

According to the fourth embodiment, during the non-braking operation, the wedge members 98 are kept in contact with the partition walls 92A by way of the wedge members 96 by the rattling suppressing mechanism 180 and the side surfaces 96B and 98B are kept in contact with each other. Consequently, the wedge members 96 and 98 can be prevented from rattling in the associated through holes 90 during the non-braking operation and at the time of starting the braking operation. Therefore, irrespective of the direction in which the first pressing member 14 is displaced relative to the second pressing member 16 in the braking operation, it is possible to smoothly start generating braking force at the time of starting the braking operation.

It is to be understood that the pressing force with which the biasing members 176A and 176B of the rattling suppressing mechanism 180 press the wedge members 96 are set to such a level as that the wedge members 96 and 98 do not press the disk part 20A and the sub-rotor 22, respectively. Therefore, the pressing of the biasing members 176A and 176B against the wedge members 96 do not cause the wedge members 96 and 98 to frictionally engage with the disk part 20A and the sub-rotor 22, respectively, so that the unnecessary braking force is not generated.

It is to be noted that in the fourth embodiment, engagements between the side surfaces 96A and 98A of the wedge members 96 and 98 and the disk part 20A and the sub-rotor 22, respectively, are not over the entire circumference around a rotation axis 18 but at eight areas spaced apart circumferentially from each other. In comparison with a conventional brake device in which frictional engagement members are pressed against a brake rotor only at a part of the entire circumference, risks of cyclic deformation of the brake rotor and vibration and brake squeal caused thereby can be reduced.

### Fifth Embodiment

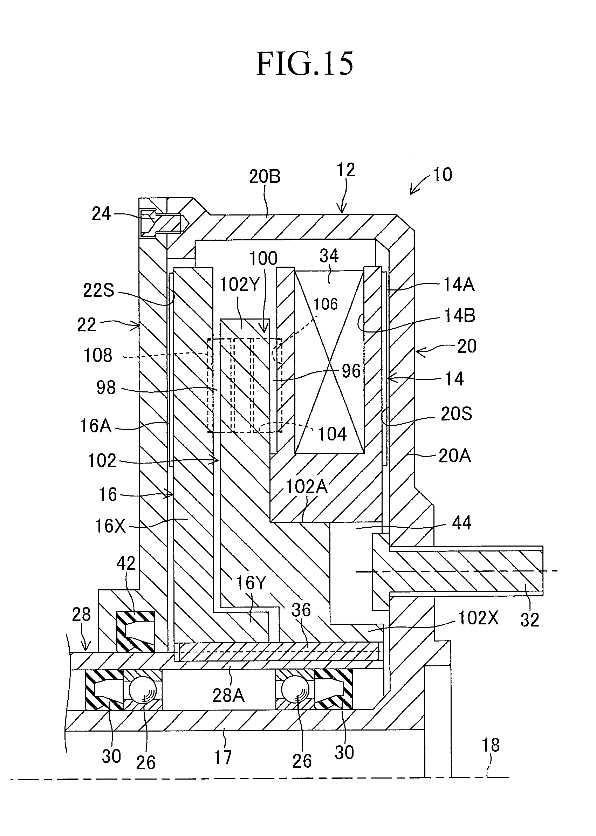

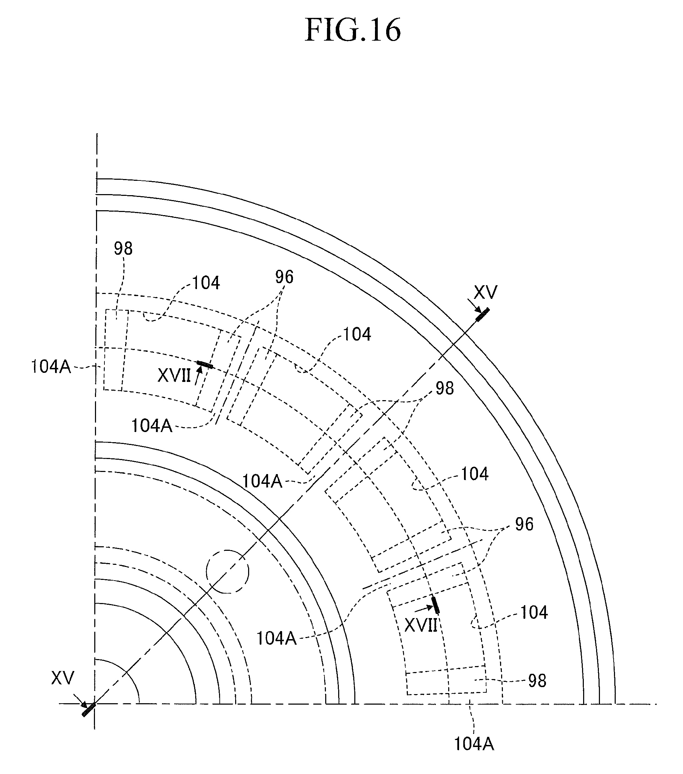

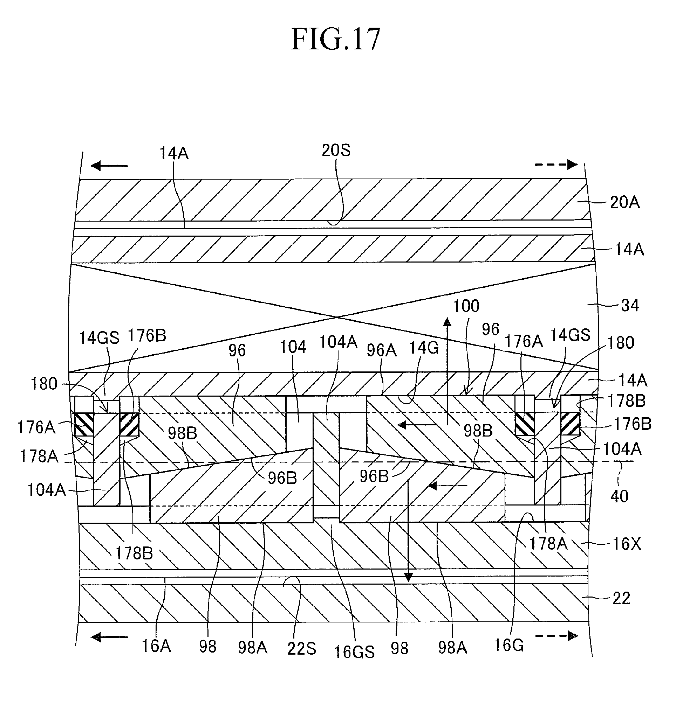

Fig. 15 is a partial sectional view showing a section of a fifth embodiment of the friction brake device according to the present invention which is structured as an electromagnetic brake device for a vehicle, as cut along a section passing through a rotation axis. Fig. 16 is a partial front view showing the fourth embodiment as viewed from right side in Fig. 15. Fig. 17 is an enlarged sectional view which is along XVII-XVII in Fig. 16. Notably, Fig. 15 is a sectional view which is along XV-XV in Fig. 16. In Figs. 15 to 17, the same members as those shown in Figs. 1, 2 and Figs. 12 to 14 are denoted by the same reference numbers as in these figures.

In the fifth embodiment, an intermediate member 102 which extends annularly around the rotation axis 18 over the entire circumference is disposed between the first and second pressing members 14 and 16. The intermediate member 102 is securely coupled at its inner peripheral portion 102X to the sleeve part 28A of the wheel carrier member 28 by the key 36. The intermediate member 102 has a cylindrical outer surface 102A which is aligned with the rotation axis 18 and supports the first pressing member 14 at the cylindrical outer surface 102A so that the first pressing member 14 can relatively rotate and can relatively displace along the rotation axis 18. In addition, the intermediate member 102 is spaced apart from the second pressing member 16 in the direction along the rotation axis 18.

As shown in Figs. 16 and 17, the intermediate member 102 has a annular plate part 102Y in the area radially outer than the cylindrical outer surface 102A. The annular plate part 102Y is provided with sixteen arcuate holes 104 which are equally spaced apart circumferentially by partition walls 104A. Each arcuate hole 104 extends along the rotation axis 18 penetrating through the annular plate part 102Y and extends arcuately around the rotation axis 18. The radially inner surface and the radially outer surface of each arcuate hole 104 are cylindrical extending along the rotation axis 18.

In each arcuate hole 104, the first wedge members 96 is positioned adjacently to the first pressing member 14 and the second wedge members 98 is positioned adjacently to the second pressing member 16. The wedge members 96 and 98 extend arcuately around the rotation axis 18 and fit into the associated arcuate hole 104. The circumferential length of the wedge members 96 and 98 are shorter than that of the arcuate holes 104. The radius of the cylindrical outer surface of each wedge member is slightly smaller than that of the cylindrical inner surface of the associated arcuate hole 104 and the radius of the cylindrical inner surface of each wedge member is slightly larger than that of the cylindrical outer surface of each arcuate hole 104.

The wedge members 96 and 98 project along the rotation axis 18 from the intermediate member 102 toward the first and second pressing members 14 and 16, respectively. The tip ends of the wedge members 96 and 98 are slightly tapered and is fitted into recesses 14G and 16G that are formed in the first and second pressing members 14 and 16, respectively, and extend circumferentially. The recesses 14G and 16G have the sizes and the shapes which can accommodate the tip ends of the wedge members 96 and 98 with a little clearance.

The recesses 14G and 16G are provided with stopper portions 14GS and 16GS, respectively, having a small projection height at the circumferential positions corresponding to the associated partition walls 104A. The stopper portions 14GS and 16GS divide the recesses 14G and 16G, respectively, into a plurality of circumferential areas. It is to be noted that the recesses 14G and 16G have the depth which prevents the tip ends of the wedge members 96 and 98 from slipping off from the associated recesses 14G and 16G even when the wedge members 96 and 98 displace along the rotation axis 18 relative to the first and second pressing members 14 and 16, respectively.

Thus, the wedge members 96 and 98 can rotate around the rotation axis 18 relative to the intermediate member 102, but cannot rotate around the rotation axis 18 relative to the first and second pressing members 14 and 16, respectively. Besides, the wedge members 96 and 98 can linearly displace along the rotation axis 18 relative to the intermediate member 102 and can linearly displace along the rotation axis 18 relative to the first and second pressing members 14 and 16, respectively.

As shown in Fig. 17, the rattling suppressing mechanism 180 is provided also in this embodiment. The biasing members 176A and 176B made from a resilient material such as rubber or the like are disposed on the both sides of each partition wall 104A and are secured to the side surface of the partition wall 104A by means of an adhesive or the like. The biasing members 176A and 176B fit in the associated notches 178A and 178B, respectively, formed in the bottom base ends of the wedge members 96 and bias the wedge members 96 against the partition walls 104A adjacent thereto in the circumferential direction.

Thus, during the non-braking operation where the solenoid 34 is not supplied with the control electric current, the wedge members 98 are kept in contact with the partition walls 104A by the wedge members 96 and the side surfaces 96B and 98B are kept in contact with each other. The biasing members 176A and 176B cooperate with the partition walls 104A to prevent the wedge members 96 and 98 from rattling in the associated through holes 90 during the non-braking operation and at the time of starting the braking operation.

During the non-braking operation, the pressing members 14, 16 and the wedge members 96, 98 are positioned in their normal positions shown in Fig. 17. The pressing force with which the biasing members 176A and 176B press the wedge members 96 are set to such a level as that the wedge members 96 and 98 do not press the disk part 20A and the sub-rotor 22, respectively, and do not make them frictionally engage with each other.

As is understood from the above, in the fifth embodiment, the wedge members 96 and 98 cooperate with the arcurate holes 104 and the partition walls 104A therebetween to define a force transmitting mechanism 106 which functions similarly to the force transmitting mechanism 100 in the fourth embodiment. Accordingly, as in the fourth embodiment, the pressing force of the first and second pressing members 14 and 16 acting against the disk part 20A and the sub-rotor 22 is increased. Notably, the fifth embodiment is structured in other aspects similarly to the above-described first to fourth embodiments.

For example, in a situation where, as shown by an arrow of a bold solid line in Fig. 17, the disk part 20A and the sub-rotor 22 are moved leftward as viewed in Fig. 17, when the solenoid 34 is supplied with the control electric current, the first pressing member 14 is pressed against the disk part 20A. As the first frictional engagement portion 14A of the first pressing member 14 frictionally engages with the disk part 20A, the first pressing member 14 is moved leftward. In consequence, the first wedge members 96 located on the right side of the partition walls 104A as spaced apart therefrom are as well moved leftward and transmit rotational torque to the associated second wedge members 98.

However, as the partition walls 104A are parts of the intermediate member 102 that cannot rotate around the rotation axis 18, the wedge member 98 which is located on the right side of the partition walls 104A as in contact therewith cannot freely move leftward as viewed in Fig. 17. As a result, a part of the rotational torque transformed into the force for pressing the second wedge member 98 against the second pressing member 16 and the sub-rotor 22 by means of the wedge action generated by the cooperation of the side surfaces 96B and 98B, which makes the second frictional engagement portion 16A of the second pressing member 16 frictionally engage with the sub-rotor 22. Thus, braking force is generated by the frictional engagement between the first frictional engagement portion 14A and the disk part 20A and the frictional engagement between the second frictional engagement portion 16A and the sub-rotor 22.

The reaction force which is generated by means of the first wedge members 96 pressing the disk part 20A by way of the first pressing member 14 is transmitted to the wedge member 98. Similarly, the reaction force which is generated by means of the second wedge member 98 pressing the sub-rotor 22 by way of the second pressing member 16 is transmitted to the wedge members 96. Therefore, as in the first to fourth embodiments, pressing force can be enhanced by effectively utilizing the reaction force and no special member is required to bear the reaction force.

Incidentlly, although the first wedge members 96 disposed on the left side of the partition walls 104A as space a part there from as well receive the force trying to move them leftward, the partition walls 104A prevent the first wedge members from moving leftward. In consequence, the first wedge members 96 cannot transmit any rotational torque to the second wedge member 98 and cannot generate any force pressing the second wedge member 98 against the second pressing member 16 and the sub-rotor 22.

Notably, in a situation where, as shown by an arrow of a broken line in Fig. 17, the disk part 20A and the sub-rotor 22 are moved rightward as viewed in Fig. 17, the same operation as above can occur. That is, except that the directions are reversed, the wedge members 96 and 98 disposed on the left side of the partition walls 104A function similarly to the wedge members 96 and 98 disposed on the right side of the partition walls 104A in a situation where the disk part 20A and the sub-rotor 22 are moved leftward as viewed in Fig. 17.

As is understood from the above, according to the fifth embodiment, as in the other embodiments described above, higher braking torque can be generated than in the brake device described in the above-mentioned Laid Open Publication.

According to the fifth embodiment, during the non-braking operation, the wedge members 98 are kept in contact with the partition walls 104A by way of the wedge members 96 by the rattling suppressing mechanism 180 and the side surfaces 96B and 98B are kept in contact with each other. Consequently, the wedge members 96 and 98 can be prevented from rattling in the associated through holes 90 during the non-braking operation and at the time of starting the braking operation. Therefore, irrespective of the direction in which the first pressing member 14 is displaced relative to the second pressing member 16 in the braking operation, it is possible to smoothly start generating braking force at the time of starting the braking operation.

It is to be understood that the pressing force with which the biasing members 176A and 176B of the rattling suppressing mechanism 180 press the wedge members 96 are set to such a level as that the wedge members 96 and 98 do not press the pressing members 14 and 16 against the disk part 20A and the sub-rotor 22, respectively. Therefore, the pressing of the biasing members 176A and 176B against the wedge members 96 do not cause the first and second pressing members 14 and 16 to frictionally engage with the disk part 20A and the sub-rotor 22, respectively, so that the unnecessary braking force is not generated.

As in the fourth embodiment, a plurality of wedge members 96 and 98 are arranged as spaced apart from each other circumferentially and the areas where the wedge members 96 and 98 conduct pressing are radially spaced apart from each other circumferentially. In the fifth embodiment, however, the wedge members 96 and 98 do not frictionally engage directly with the disk part 20A and the sub-rotor 22, respectively, but press the first and second pressing members 14 and 16 against the disk part 20A and the sub-rotor 22, respectively.

Accordingly, as in the first and third embodiments, the first and second pressing members 14 and 16 always frictionally engage with the disk part 20A and the sub-rotor 22 around the rotation axis 18 over the entire circumference. Therefore, as in the first and third embodiments, the risks of abnormal abrasion of the frictional engagement portions, brake vibration, brake squeal and the likes can effectively be reduced.

In particular, according to the fifth embodiment, although the intermediate member 102 is necessary, a plurality of arcuate holes do not need to be formed by the first and second pressing members 14 and 16. Consequently, as compared to the above-described fourth embodiment, the structure of the brake device can be simplified and assembly of the bake device can be easily conducted.

In the illustrated embodiment, both the first pressing member 14 and the intermediate member 102 are securely coupled to the sleeve part 28A of the wheel carrier member 28. However, in the configuration in which the stopper portions 16GS are provided and the circumferential rotation of the second wedge members 98 are limited by the stopper portions, one of the first pressing member 14 and the intermediate member 102 may be rotatable around the rotation axis 18. In the configuration in which the first pressing member 14 and the intermediate member 102 are not rotatable around the rotation axis 18, the stopper portions 16GS may be omitted.

As is understood from the above, in the first, third and fifth embodiments, the frictional engagement portions 14A and 16A extend around the rotation axis 18 over the entire circumference at the same radius positions having the centers on the rotation axis 18, and in the second embodiment, the axes 52 and 58 are positioned at the same radius positions having the centers on the rotation axis 18 and are aligned with each other as much as possible. In consequence, the reaction force generated by means of the frictional engagement portions and the frictional engagement members 54 and 60 being pressed by one of the pressing members 14 and 16 can effectively be transmitted to the other pressing member.

According to the embodiments other than the third embodiment, the disk part 20A and the sub-rotor 22 cooperate with the rotating shaft 17, the wheel carrier member 28 and the seal member 42 to define the closed space 44, and the pressing members 14 and 16 and the like are accommodated in the closed space 44. Consequently, a risk can be reduced that muddy water and dust may enter into the brake device 10, which enables to enhance the durability of the brake device 10. The necessity of a cover or the like for restraining muddy water and dust from entering into the brake device 10 can be eliminated.

According to the embodiments other than the third embodiment, the closed space is filled with a lubricant. Accordingly, the engagement areas around the balls38 and the frictional contact areas can be lubricated by the lubricant. Therefore, the force transmitting mechanisms 46, 100 and 106 can smoothly operate and the pressing by the pressing members 14 and 16 on the frictional engagement portions 14A and the likes can preferably be executed. Abnormal abrasion of the members in the frictional contact areas can be restrained from occurring; heat generation and brake squeal by friction can be restrained from occurring; and the temperature rising of the members can be refrained from occurring by means of the pressing members and the like being cooled by the lubricant.

According to the above-described embodiments, the disk part 20A, the cylindrical part 20B and the sub-rotor 22 form a staple-like sectional shape which opens radially inwardly in a radial section passing through the rotation axis 18. The pressing members 14 and 16 and the like are positioned between the disk part 20A and the sub-rotor 22, and are adapted to press the pressing members 14 and 16 and the like against the disk part and the sub-rotor in the direction of separating them from each other.

Consequently, a caliper is not required which extends to bridge between the opposite sides of the brake rotor, supports the friction members and the pressing devices and bears the reaction force of the pressing force by the pressing devices as in a conventional disk type brake device. No enhancement of the caliper in rigidity is required. Since the disk part 20A and the sub-rotor 22 extend around the rotation axis 18 over the entire circumference, the brake rotor 12 can be enhanced in rigidity in comparison with a caliper which extends only in an arc shape around the rotation axis.

According to the above-described embodiments, the thickness of the cylindrical part 20B is smaller than those of the disk part 20A and the sub-rotor 22. However, the cylindrical part 20B extends cylindrically around the rotation axis 18 over the entire circumference and it has a rigidity higher than those of the disk part 20A and the sub-rotor 22.

In consequence, as compared to where the cylindrical part 20B has a rigidity lower than those of the disk part 20A and the sub-rotor 22, it is possible to reduce the deformation amount by which the disk part 20A and the sub-rotor 22 deform in the direction of separating them from each other during the operation of the brake device 10. Therefore, as compared to where the magnitude relation of the rigidities is reversed, the braking action of the brake device 10 can be enhanced.

According to the above-described embodiments, the cylindrical part 20B is integral with the disk part 20A, and the cylindrical part 20B and the disk part 20A form the main rotor 20 to which a rim part of a vehicle wheel is coupled. Consequently, as compared to where the cylindrical part 20B is a part of the sub-rotor 22 and the cylindrical part 20B is coupled to a main rotor 20 having a substantially disk shape, it is possible to enhance the rigidity of the brake rotor 12 and to enhance the attachment strength of the brake device 10 coupled to a rim part of a vehicle wheel.

In the above-described embodiments, the first pressing member 14 is rotatable around the rotation axis 18 and the second pressing member 16 is not rotatable around the rotation axis 18. The brake device according to the present invention, however, may be a brake device in which the first and second pressing members are rotatable around the rotation axis 18 and the rotations of the first and second pressing members are precluded from exceeding a prescribed value and the structures are not limited to those of the above-described embodiments.

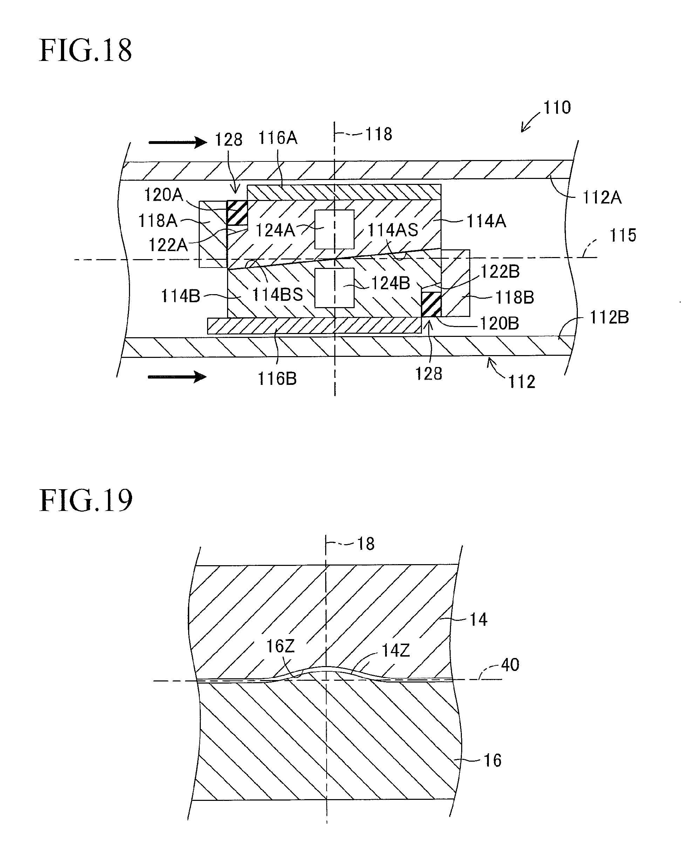

For example, Fig. 18 is an explanatory view of the principal portions of the brake device as viewed in a radial direction showing the principle of increasing the pressing force in the brake device and suppressing rattling according to the present invention. In Fig.18, 110 and 112 denote a brake device and a brake rotor, respectively, which rotate around a rotation axis 118 as shown by an arrow. The brake rotor 112 has a first disk 112A and a second disk 112B spaced apart from each other along the rotation axis 118. A first pressing member 114A and a second pressing member 114B are disposed between the disks 112A and 112B.

A first frictional engagement member 116A is disposed between the first disk 112A and the first pressing member 114A and is supported by the first pressing member 114A. Similarly, a second frictional engagement member 116B is disposed between the second disk 112B and the second pressing member 114B and is supported by the second pressing member 114B. The first and second pressing members 114A and 114B have inclined surfaces 114AS and 114BS, respectively, which are inclined in the same direction relative to a virtual plane 115 perpendicular to the rotation axis 118 and extend in parallel to each other. The side surfaces of the first and second pressing members 114A and 114B on the side opposite to the inclined surfaces 114AS and 114BS, respectively, extend parallel to the virtual plane115. Consequently, the first and second pressing members 114A and 114B are trapezoidal in the section shown in Fig. 18.

First stationary member 118A and the second stationary member 118B are disposed at positions close to the bottom base ends of the first and second pressing members 114A and 114B, respectively. Biasing members 120A and 120B made from a resilient material such as rubber or the like are secured to the side surfaces of the stationary members 118A and 118B, respectively, which oppose to the pressing members 114A and114B, respectively, by means of an adhesive or the like. The biasing members 120A and 120B fit in the associated notches 122A and 122B formed in the bottom base ends of the pressing members 114A and 114B, respectively, and bias the pressing members 114A and 114B in the direction of separating them from the stationary members 118A and 118B, respectively.

Thus, during the non-braking operation, the first and second stationary members 118A and 118B are in contact with each other at their inclined surfaces 114AS and 114BS. While the first and second frictional engagement members 116A and 116B are spaced apart from the first and second disks 112A and 112B, respectively, the frictional engagement members may contact with the associated disks so as not to generate any braking force. Notably, the pressing members 114A and 114B may contact with the stationary members 118A and 118B at their bottom base ends.

In addition, a first energizing unit 124A and a second energizing unit 124B are provided in the first and second pressing members 114A and 114B, respectively. During braking operation, one of the first and second energizing units 124A and 124B energize the associated first or second pressing member 114A or 114B against the associated first or second disk 112A or 112B, respectively.

During non- braking operation, the first and second energizing units 124A and 124B are not actuated. The first and second frictional engagement members 116A and 116B do not contact with the first disk 112A and second disk 112B, respectively, and, accordingly, the brake device 110 does not generate any braking force by the frictional force therebetween. The first and second pressing members 114A and 114B do not afford and receive any rotational torque acting around the rotation axis 118 and do not afford and receive any force acting along the rotation axis 118.

In contrast, during braking operation, one of the energizing units 124A and 124B are actuated. For example, when the energizing unit 124A is actuated, the first pressing member 114A is energized toward the first disk 112A and the frictional engagement member 116A is pressed against the disk 112A by the pressing member 114A. When the frictional engagement member 116A frictionally engages with the disk 112A, rotational torque generated by the frictional force between them acts on the frictional engagement member 116A and the pressing member 114A,which displaces the pressing member 114A rightward as viewed in Fig. 18 to engage with the pressing member 114B. As a result, the pressing member 114A drive the pressing member 114B in the direction in which the rotational torque acts, and the pressing member 114B contacts with the stationary member 118B. The pressing members 114A and 114B are prevented from rotating further by the stationary member 118B so that the frictional force between the frictional engagement member 116A and the disk 112A generates a braking force.

The rotational torque is dissolved into force acting around the rotation axis 118 and a force acting along the rotation axis 118By the wedge action generated by the engagement of the inclined surfaces 114AS and 114BS. As the force acting along the rotation axis 118 acts in the direction separating the pressing members 114A and 114B from each other, the pressing member 114B presses the frictional engagement member 116B against the disk 112B to engage them with each other. Accordingly, the frictional force between the frictional engagement member 116B and the disk 112B also generates braking force. Thus, the pressing members 114A, 114B and the stationary members 118A, 118B cooperate with each other to function as a force transmission mechanism 126.

Incidentally, when the brake rotor 112 is rotated in the direction opposite to that shown by the arrow, the energizing unit 124B is actuated. The first pressing member 114B is energized toward the first disk 112B and the frictional engagement member 116B is pressed against the disk 112B. In other words, an energizing unit to be actuated is determined in accordance with the rotational direction of the brake rotor 112 so that rotational torque which one of the pressing members receives when the frictional engagement member frictionally engage with the disk is transmitted to the other pressing member.

It is to be understood that as in the above-described first to third embodiments, in a configuration where the inclined surfaces 114AS and 114BS have portions inclined in the opposite direction relative to the virtual plane 115, either of the energizing units may be actuated regardless of the rotational direction of the brake rotor 112. In that case, stationary members corresponding to the stationary members 118A and 118B are provided on circumferentially both sides of the pressing member 114A or 114B which is actuated.

During the non-braking operation, the pressing members 114A and 114B are pressed against each other by the biasing members 120A and 120B and are kept in contact with each other at their inclined surfaces 114As and 114BS. Consequently, the biasing members 120A and 120B cooperate with the stationary members 118A and 118B to form a rattling suppressing mechanism 128 which prevent the wedge members 114A and 114B from rattling during the non-braking operation and at the time of starting the braking operation. Therefore, irrespective of the direction in which the brake rotor 112 rotates in the braking operation, it is possible to smoothly start generating braking force at the time of starting the braking operation.

It is to be understood that the pressing force with which the biasing members 120A and 120B press the wedge members 114A and 114B are set to such a level as that the wedge members 114A and 114B do not press the frictional engagement members 116A and 116B against the first and second disk 112A and 112B, respectively. Therefore, the pressing of the biasing members 120A and 120B against the wedge members 114A and 114B do not cause the frictional engagement members 116A and 116B to frictionally engage with the first and second disks 112A and 112B, respectively, so that the unnecessary braking force is not generated.

While in the fourth and fifth embodiments, the biasing members176A and 176B are secured to the partition walls such as the partition walls 92B, they may be disposed in the notches 178A and 178B as secured to the wall surfaces of the notches.

While the present invention has been described with reference to the above embodiments, it will be apparent to those skilled in the art that the present invention is not limited thereto, but may be embodied in various other forms without departing from the scope of the invention.

For example, in the above-described first to third embodiments, the cam surfaces 14Z and 16Z of the force transmission mechanism 46 have the curved sections 14ZA and 16ZA and the inclined sections 14ZB, 16ZB, 14ZC and 16ZC which extend on the both sides of the curved sections. However, the cam surfaces 14Z and 16Z of the force transmission mechanism 46 may have another shape so long as it has a pair of surfaces inclined in the same direction relative to the virtual plane 40 perpendicular to the rotation axis 118.

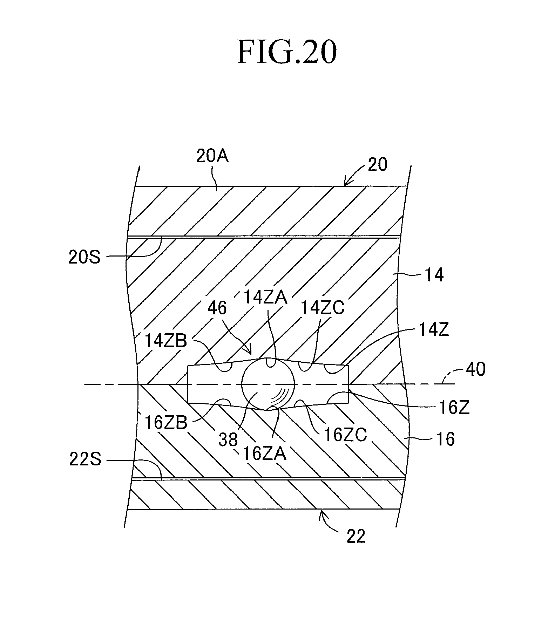

As shown in Fig. 19, for example, the cam surface 14Z may have a mountain shape and the cam surface 16Z may have a volley shape accommodating the cam surface 14Z. In this modification, rolling elements such as balls may be interposed between the cam surfaces of the first and second pressing members. In addition, as shown in Fig. 20, the inclined sections 14ZB, 16ZB, 14ZC and 16ZC which extend on the both sides of the curved sections may be curved so that their inclination relative to the virtual plane 40 gradually decreases with the distances from the associated curved sections. Similarly, in the fourth and the fifth embodiments, the side surfaces of the wedge members 96 and 98 may be curved so that their inclination relative to the virtual plane 40 gradually decreases with the distances from the top bases to the bottom bases of the trapezoids.

In the configuration where, as in the first to third embodiments, rolling elements such as balls 38 are interposed between the cam surfaces of the first and second pressing members, the inclined sections of only one of the cam surfaces may be curved so that their inclination relative to the virtual plane 40 gradually decreases with the distances from the associated curved sections. Incidentally, rolling elements may be column rollers or tapered rollers.

According to these modifications, the compornent of the force which is derived by dissolving a rotational torque in the direction along the rotation axis 18 can gradually be increased as the relative displacements of the first and second pressing members 14 and 16 or the wedge members 96 and 98. As a result, a braking property of the brake device can be made progressive.

While in the above-described first to third embodiments, the cam surfaces 14Z and 16Z have the curved sections 14ZA and 16ZA, respectively, they may consist of only the inclined sections 14ZB, 16ZB, 14ZC and 16ZC. In that configuration, the areas where the inclination relative to the virtual plane 40 is zero are the positions where the inclined sections 14ZB and 14ZC, and 16ZB and 16ZC intersect, respectively.

In the above-described embodiments other than the second embodiment, the first and second frictional engagement members are integrally formed with the first and second pressing members 14 and 16 or the wedge members 96 and 98 as the frictional engagement portions 14A and 16A. In these embodiments, however, at least one of the first and second frictional engagement members may be a member separate from the pressing member or the wedge member.

In the above-described first and third embodiments, the frictional engagement portions 14A and 16A have the same size and in the second embodiment, the first and second frictional engagement members 54 and 60 have the same diameter. However, these may have different sizes and diameters.

In the above-described second embodiment, the frictional portions formed on both sides of the first and second frictional engagement members 54 and 60 are provided at the same radial position to each other from the rotation axes 54 and 58 as centers. However, the frictional portions formed on both sides of the frictional engagement members 54 and 60 may be provided at different radial positions from each other.

In the above-described embodiments, the cylindrical part 20B is integrally formed with the disk part 20A so as to form the main rotor 20. However, the cylindrical part 20B may integrally be formed with the sub-rotor 22 and, alternatively, the disk part 20A, the disk part 20A and the sub-rotor 22 may be separate members.

While in the above-described embodiments other than the third embodiment, the main rotor 20 and the sub-rotor 22 cooperate with the rotating shaft 17, the wheel carrier member 28 and the seal member 42 to define a closed space 44, they may not define a closed space.

Notably, in the above-described embodiments other than the third embodiment, the first pressing member 14, the second pressing member 16 and frictional engagement members are accommodated in the closed space 44. Accordingly, as compared to where the pressing members and the likes are not accommodated in the closed space, the members are liable to increase in temperature during the operation of the brake device 10. However, if the frictional engagement members are made from a ceramic base frictional material, a decrease in the braking force due to the temperature rise is small. In a configuration where the pressing members and the likes are accommodated in a closed space, the main rotor 20 and the sub-rotor 22 may be provided with cooling fins so that the members be restrained from increasing in temperature.

The clearance adjustment mechanisms in the above-described first to third embodiments and the first modification may be replaced with each other. While the biasing members in the clearance adjustment mechanisms in the above-described first to third embodiments and the first modification are the compression coil springs, they may be replaced with other springs such as leaf springs or resilient bodies such as rubbers. Conversely, while the biasing members in the clearance adjustment mechanisms in the above-described fourth and fifth embodiments are the resilient bodies such as rubbers, they may be replaced with springs such as compression coil springs or leaf springs.

While in the above-described embodiments other than the third embodiment, the first pressing member 14 is energized toward the disk part 20A by the electromagnetic force of the solenoid 34. However, the means for energizing a pressing member may be a hydraulic means which is similar to that in the third embodiment, for example. In addition, while in the above-described embodiments, the brake device is one for a vehicle, the brake device according to the present invention may be applied to any application other than a vehicle.

## Claims

1. A friction brake device comprising:
first and second mutually opposed friction surfaces which are rotatable around a rotation axis and extend perpendicularly to said rotation axis;
first and second friction members which are disposed between said first and second friction surfaces and are supported so that said friction members can displace along said rotation axis and can relatively rotate around said rotation axis;
a pressing force control mechanism which control force with which at least one of said first and second friction members are pressed against said associated friction surface; and
a force increasing mechanism which transforms the rotational torque that at least one of said first and second friction members receives from the asociated friction surface to the force acting in the direction of separating said first and second friction members through the use of a wedge action generated by means of said first and second friction members being relatively rotated around said rotation axis by said rotational torque, and transmits reaction force generated by means of said friction surfaces being pressed by said first and second friction members, respectively, between said first and second friction members;
said force increasing mechanism does not conduct said force increasing by said force transforming when the force which is controlled by said pressing force control mechanism is 0;
with the positions at which said first and second friction members take when their relative rotation is 0 being normal positions, said force increasing mechanism includes a normal position-recovering mechanism which returns said first and second friction members to their normal positions when the force which is controlled by said pressing force control mechanism is 0.

2. The friction brake device according to claim 1, wherein said friction brake device comprises a clearance adjustment mechanism which reduces a clearance between at least one of said first and second friction members and said associated friction surface by relatively displacing said first and second friction members along said rotation axis so as to leave from each other when said clearance inreases in a situation where said first and second friction members are at said normal positions.

3. The friction brake device according to claim 1 or 2, wherein said normal position-recovering mechanism includes first and second resilient members which are resiliently deformed by said first and second friction members, respectively, by means of said first and second friction members relatively rotating from said normal positions.

4. The friction brake device according to claim 2, wherein said clearance adjustment mechanism includes a slider which is supported by one of said first and second friction members so as to displace relative to said one friction member along said rotation axis and having an opposed surface of said one friction member, and an actuator which displaces said slider toward the other friction member when said clearance increases.

5. The friction brake device according to any one of claims 1 to 4, wherein said force increasing mechanism has first and second opposed surfaces which are provided on said first and second friction members, respectively, as opposed to each other and include areas inclined in the same directions relative to a vertical plane perpendicular to said rotation axis, and transforms relative rotational torque of said first and second friction members into the force acting in the direction of separating said first and second friction members from each other by the cooperation of said first and second opposed surfaces.

6. The friction brake device according to any one of claims 1 to 5, wherein the distance in the direction along said rotation axis between the surfaces of said first and second friction members on the side of said first and second friction surfaces assumes a minimum value when said first and second friction members are at said normal positions.

7. The friction brake device according to claim 6, wherein said first and second opposed surfaces have areas where the inclination relative to said virtual plane is 0, and said first and second opposed surfaces on both sides of said areas where the inclination relative to said virtual plane is 0 are inclined in the directions opposite to each other relative to said virtual plane.

8. The friction brake device according to claim 7, wherein
said force increasing mechanism includes rolling bodies between said first and second opposed surfaces;
said normal position-recovering mechanism includes first and second resilient members which are resiliently disposed between said rolling bodies and said first and second friction members on both sides of said rolling bodies, and are resiliently deformed by said first and second friction members by means of said first and second friction members relatively rotating from said normal positions so as to press said rolling bodies in the opposite directions; and
said first and second resilient members position said rolling bodies between said areas where the inclination relative to said virtual plane is 0 in a situation where the force controlled by said pressing force control mechanism is 0.

9. The friction brake device according to claim 8, wherein supporting members are disposed between said first and second resilient members and said first and second friction members, respectively.

10. The friction brake device according to claim 4, wherein
each clearance adjustment mechanism includes wedge members which are supported so as to displace relative to said associated slider in a direction across the direction where said slider displaces relative to said one friction member; and
each actuator includes a pressing member which presses said associated wedge member in the direction where said associated wedge member displace said associated slider toward said other friction member.

11. The friction brake device according to claim 10, wherein one of said slider and said wedge member has ratchet teeth on the side opposed to the other of said slider and said wedge member; the other of said slider and said wedge member supports ratchet claw which is resiliently pressed against said ratchet teeth; and said ratchet teeth and said ratchet claw cooperate with each other to prevent said wedge member from displacing relative to said slider in the direction opposite to the depressing direction of said pressing member.
